(19)

**Europäisches Patentamt**
**European Patent Office**
**Office européen des brevets**

(11) **EP 4 712 570 A1**

(12) **EUROPEAN PATENT APPLICATION**

(43) Date of publication:
**18.03.2026 Bulletin 2026/12**

(21) Application number: **25201866.8**

(22) Date of filing: **12.09.2025**

(51) International Patent Classification (IPC):
**H04W 36/36** (2009.01)

(52) Cooperative Patent Classification (CPC):
**H04W 36/362**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **12.09.2024 KR 20240125179**
**12.09.2024 KR 20240125180**
**03.09.2025 KR 20250125219**

(71) Applicant: **KT Corporation**
**Seongnam-si, Gyeonggi-do 13606 (KR)**

(72) Inventor: **HONG, Sung-pyo**
**13606 Seongnam-si, Gyeonggi-do (KR)**

(74) Representative: **BCKIP Part mbB**
**MK1**
**Landsbergerstraße 98, 3.Stock**
**80339 München (DE)**

(54) **CONDITIONAL L1L2 HANDOVER WITH EARLY SYNCHRONISATION**

(57) Provided are a method and apparatus for controlling mobility in a wireless communication system. The method of the terminal may include receiving a conditional layer 1 (L1)/layer 2 (L2) triggered mobility (LTM) configuration, after receiving the conditional LTM configuration, performing an evaluation of an execution condition for conditional LTM and an early synchronization to a candidate cell, and executing the conditional LTM based on the performed evaluation of the execution condition and the performed early synchronization.

FIG. 7

# EP 4 712 570 A1

**Description**

CROSS-REFERENCE TO RELATED THE APPLICATION

This application is based on and claims priority on Patent Application No. 10-2024-0125179 filed on Sep. 12, 2024, No. 10-2024-0125180 filed on Sep. 12, 2024 and No. 10-2025-0125219 filed on Sep. 3, 2025 in the Korean Intellectual Property Office.

BACKGROUND

Technical Field

The present disclosure relates to wireless communication applicable to 5G NR, 5G-Advanced and 6G.

Description of the Related Art

With the increase in the number of communication devices, there is a corresponding rise in communication traffic that must be managed. To handle this increased communication traffic, a next generation 5G system, which is an enhanced mobile broadband communication system compared to the existing LTE system, has become essential. Such a next generation 5G system has been designed based on scenarios which are classified into Enhanced Mobile BroadBand (eMBB), Ultra-reliable and low-latency communication (URLLC), Massive Machine-Type Communications (mMTC), and more.

eMBB, URLLC, and mMTC represent next generation mobile communication scenarios. eMBB is characterized by high spectral efficiency, high user experience data rate, and high peak data rate. URLLC is characterized by ultra-reliability, ultra-low latency, and ultra-high availability (e.g., vehicle-to-everything (V2X), Emergency Service, and Remote Control). mMTC is characterized by low cost, low energy consumption, short packet transmission, and massive connectivity (e.g., Internet of Things (IoT)).

SUMMARY

The disclosure relates to L1/L2 Triggered Mobility (LTM) for a terminal in a wireless communication system, and is to provide a method and apparatus for controlling execution conditions and processing terminal configuration to support terminal-based LTM.

According to an embodiment, a method of a terminal may be provided for operating in a wireless communication system. The method may include receiving a conditional layer 1 (L1)/layer 2 (L2) triggered mobility (LTM) configuration, after receiving the conditional LTM configuration, performing an evaluation of an execution condition for conditional LTM and an early synchronization to a candidate cell, and executing the conditional LTM based on the performed evaluation of the execution condition and the performed early synchronization.

According to another embodiment, a terminal may be provided for operating in a wireless communication system. The terminal may include at least one processor; and at least one memory configured to store instructions and operably electrically connectable to the at least one processor, wherein operations performed based on the instructions executed by the at least one processor include: receiving a conditional layer 1 (L1)/layer 2 (L2) triggered mobility (LTM) configuration, after receiving the conditional LTM configuration, performing an evaluation of an execution condition for conditional LTM and an early synchronization to a candidate cell, and executing the conditional LTM based on the performed evaluation of the execution condition and the performed early synchronization.

The execution of the conditional LTM may be performed when an evaluation result of the execution condition satisfies the execution condition.

Additionally, the terminal may receive the execution condition, wherein the execution condition and the conditional LTM configuration may be received via radio resource control (RRC) signaling. Through this RRC signaling, at least one of a channel state information (CSI) report configuration associated with the execution condition or a time alignment timer (TAT) value for the early synchronization may be received. Here, the CSI report configuration is associated with at least one of a first event or a second event, where the first event may correspond to a case where a beam of the candidate cell is better than a beam of the serving cell by an amount of an offset, and the second event may correspond to a case where the beam of the serving cell becomes worse than a first absolute threshold and the beam of the candidate cell becomes better than a second absolute threshold.

Meanwhile, the evaluation of the execution condition may be performed for any beam of the candidate cell. The performing the early synchronization may include receiving timing advance (TA) information for the candidate cell from a source base station.

The execution of the conditional LTM may include a medium access control (MAC) entity indicating, to a higher layer, target candidate configuration identification information for which an L1 measurement-based event is satisfied.

During the execution of the conditional LTM, when a medium access control (MAC) reset operation is performed by a request from a higher layer and a time alignment timer (TAT) for the early synchronization is running, a random access channel-less (RACH-less) conditional LTM cell switch may be considered ongoing.

BRIEF DESCRIPTION OF THE DRAWINGS

FIG. 1 is a diagram illustrating a wireless communication system.
FIG. 2 is a diagram illustrating a structure of a radio frame used in new radio (NR).
FIGS. 3A to 3C illustrate exemplary architectures for a wireless communication service.
FIG. 4 illustrates a slot structure of an NR frame.
FIG. 5 shows an example of a subframe type in NR.
FIG. 6 illustrates a structure of a self-contained slot.
FIG. 7 is a signal sequence diagram that illustrating a conditional LTM procedure according to an embodiment of the disclosure.
FIG. 8 is a block diagram showing apparatuses according to an embodiment of the disclosure.
FIG. 9 is a block diagram showing a terminal according to an embodiment of the disclosure.
FIG. 10 is a block diagram of a processor in accordance with an embodiment.
FIG. 11 is a detailed block diagram of a transceiver of a first apparatus shown in FIG. 8 or a transceiving unit of an apparatus shown in FIG. 9.

DETAILED DESCRIPTION

The technical terms used in this document are merely for describing specific embodiments and should not be considered to limit the scope of the embodiments of the disclosure. Unless otherwise defined, the technical terms used in this document should be interpreted as commonly understood by those skilled in the art, without being construed too broadly or too narrowly. If any technical terms used do not precisely convey the intended meaning of the disclosure, they should be replaced with or interpreted as technical terms that are accurately understood and recognized by those skilled in the art. The general terms used in this document should be interpreted according to their dictionary definitions, without overly narrow interpretations.

The singular form used in the disclosure includes the plural unless the context dictates otherwise. The term 'include' or 'have' may represent the presence of features, numbers, steps, operations, components, parts or the combination thereof described in the disclosure. The term 'include' or 'have' may not exclude the presence or addition of another feature, another number, another step, another operation, another component, another part or the combination thereof.

The terms 'first' and 'second' are used to describe various components without limiting them to these specific terms. The terms 'first' and 'second' are only used to distinguish one component from another component. For example, a first component may be named as a second component without departing from the scope of the disclosure.

When an element or layer is referred to as being "connected to" or "coupled to" another element or layer, it may be directly connected or coupled to the other element or layer, there might be intervening elements or layers. In contrast, when an element or layer is referred to as being "directly connected to" or "directly coupled to" another element or layer, there are no intervening elements or layers.

Hereinafter, the exemplary embodiments of the disclosure will be described in detail with reference to the accompanying drawings. In describing the disclosure, for ease of understanding, the same reference numerals will be used throughout the drawings for the same components, and repetitive description on these components will be omitted. Detailed description on well-known arts that may obscure the essence of the disclosure will be omitted. The accompanying drawings are provided to merely facilitate understanding of the embodiment of disclosure and should not be seen as limiting. It should be recognized that the essence of this disclosure extends the illustrations, encompassing, replacements or equivalents in variations of what is shown in the drawings.

In this disclosure, "A or B" may mean "only A", "only B", or "both A and B". In other words, "A or B" in the disclosure may be interpreted as "A and/or B". For example, "A, B or C" may mean "only A", "only B", "only C", or "any combination of A, B and C".

In this disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In this disclosure, "at least one of A and B" may mean "only A", "only B" or "both A and B". In addition, "at least one of A or B" or "at least one of A and/or B" may be interpreted as the same as "at least one of A and B".

In addition, "at least one of A, B and C" may mean "only A", "only B", "only C", or "any combination of A, B and C". Further, "at least one of A, B or C" or "at least one of A, B and/or C" may mean "at least one of A, B and C".

Also, parentheses used in this disclosure may mean "for example". For example, "control information (PDCCH)" may mean that "PDCCH" is an example of "control information". However, "control information" in this disclosure is not limited to "PDCCH". As another example, "control information (i.e., PDCCH)", may also mean that "PDCCH" is an example of "control information".

Each of the technical features described in one drawing in this disclosure may be implemented independently or simultaneously.

In the accompanying drawings, user equipment (UE) is illustrated as an example and may be referred to as a terminal, mobile equipment (ME), and the like. UE may be a portable device such as a laptop computer, a mobile phone, a personal digital assistance (PDA), a smart phone, a multimedia device, or the like. UE may be a non-portable device such as a personal computer (PC) or a vehicle-mounted device.

Hereinafter, the UE may be as an example of a device capable of wireless communication. The UE may be referred to as a wireless communication device, a wireless device, or a wireless apparatus. The operation performed by the UE may be applicable to any device capable of wireless communication. A device capable of wireless communication may also be referred to as a radio communication device, a wireless device, or a wireless apparatus.

A base station generally refers to a fixed station that communicates with a wireless device. The base station may include an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), and the repeater(relay).

While embodiments of the disclosure are described based on a long term evolution (LTE) system, an LTE-advanced (LTE-A) system, and a new radio (NR) system, such embodiments may be applicable to any communication system that fits the described criteria.

**<Wireless Communication System>**

With the success of long-term evolution (LTE)/LTE-A (LTE-Advanced) for the 4th generation mobile communication, the next generation mobile communication (e.g., 5th generation: also known as 5G mobile communication) has been commercialized and the follow-up studies are also ongoing.

The 5th generation mobile communications, as defined by the International Telecommunication Union (ITU), provide a data transmission rate of up to 20 Gbps and a minimum actual transmission rate of at least 100 Mbps anywhere. The official name of the 5th generation mobile telecommunications is 'IMT-2020'.

ITU proposes three usage scenarios: enhanced Mobile Broadband (eMBB), massive Machine Type Communication (mMTC) and Ultra Reliable and Low Latency Communications (URLLC).

URLLC is a usage scenario requiring high reliability and low latency. For example, services such as automatic driving, factory automation, augmented reality require high reliability and low latency (e.g., a delay time of less than 1 ms). The delay time of current 4G (e.g., LTE) is statistically about 21 to 43 ms (best 10%) and about 33 to 75 ms (median), which insufficient to support services requiring a delay time of about 1 ms or less. Meanwhile, eMBB is a usage scenario that requires ultra-wideband mobile data transmission.

That is, the 5G mobile communication system offers a higher capacity compared to current 4G LTE. The 5G mobile communication system may be designed to increase the density of mobile broadband users and support device to device (D2D), high stability, and machine type communication (MTC). 5G research and development focus on achieving lower latency times and lower battery consumption compared to 4G mobile communication systems, enhancing the implementation of the Internet of things (IoTs). A new radio access technology, known as new RAT or NR, may be introduced for such 5G mobile communication.

An NR frequency band is defined to include two frequency ranges FR1 and FR2. Table 1 below shows an example of the two frequency ranges FR1 and FR2. However, the numerical values associated with each frequency range may be subject to change, and the embodiments are not limited thereto. For convenience of description, FR1 in the NR system may refer to a Sub-6 GHz range, and FR2 may refer to an above-6 GHz range, which may be called millimeter waves (mmWs).

[Table 1]

| Frequency Range designation | Corresponding frequency range | Subcarrier Spacing |
| --- | --- | --- |
| FR1 | 410MHz - 7125MHz | 15, 30, 60kHz |
| FR2 | 24250MHz - 52600MHz | 60, 120, 240kHz |

The numerical values of the frequency ranges may be subject to change in the NR system. For example, FR1 may range from about 410 MHz to 7125 MHz as listed in [Table 1]. That is, FR1 may include a frequency band of 6 GHz (or 5850, 5900, and 5925 MHz) or higher. For example, the frequency band of 6 GHz (or 5850, 5900, and 5925 MHz) or higher may include an unlicensed band. The unlicensed band may be used for various purposes, for example, vehicle communication (e.g., autonomous driving).

The 3GPP communication standards define downlink (DL) physical channels and DL physical signals. DL physical channels are related to resource elements (REs) that convey information from a higher layer while DL physical signals, used in the physical layer, correspond to REs that do not carry information from a higher layer. For example, DL physical channels include physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH). DL physical signals include reference signals (RSs) and synchronization signals (SSs). A reference signal (RS) is also known as a pilot signal and has a predefined special waveform known to both a gNode B (gNB) and a UE. For example, DL RSs include cell specific RS, UE-specific RS (UE-RS), positioning RS (PRS), and channel state information RS (CSI-RS). The 3GPP LTE/LTE-A standards also define uplink (UL) physical channels and UL physical signals. UL channels correspond to REs with information from a higher layer. UL physical signals are used in the physical layer and correspond to REs which do not carry information from a higher layer. For example, UL physical channels include physical uplink shared channel (PUSCH), physical uplink control channel (PUCCH), and physical random access channel (PRACH). UL physical signals include a demodulation reference signal (DMRS) for a UL control/data signal, and a sounding reference signal (SRS) used for UL channel measurement.

In this disclosure, PDCCH/PCFICH/PHICH/PDSCH refers to a set of time-frequency resources or a set of REs carrying downlink control information (DCI)/a control format indicator (CFI)/a DL acknowledgement/negative acknowledgement (ACK/NACK)/DL data. Further, PUCCH/PUSCH/PRACH refers to a set of time-frequency resources or a set of REs carrying UL control information (UCI)/UL data/a random access signal.

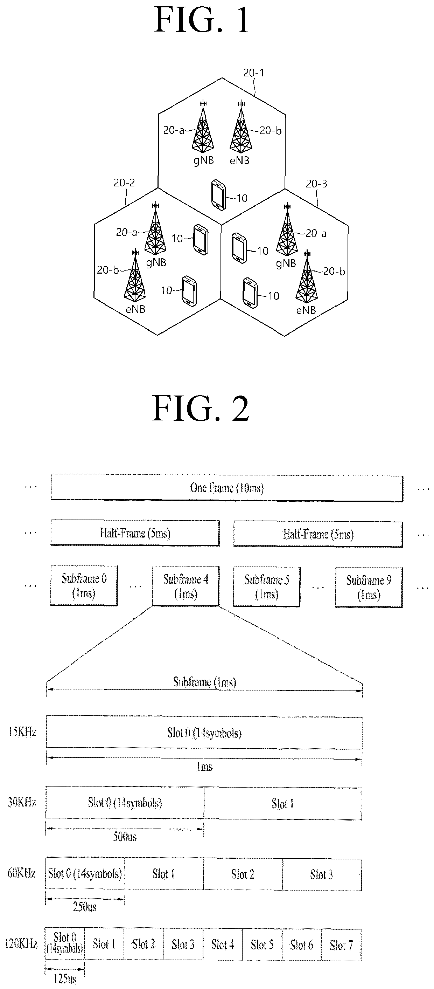

**FIG. 1 is a diagram illustrating a wireless communication system.**

Referring to FIG. 1, the wireless communication system may include at least one base station (BS). For example, the BSs may include a gNodeB (or gNB) 20a and an eNodeB (or eNB) 20b. The gNB 20a supports 5G mobile communication. The eNB 20b supports 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A user equipment (UE) typically belongs to one cell, and the cell to which the UE belongs is called a serving cell. A base station providing a communication service to a serving cell is referred to as a serving base station (serving BS). Since the wireless communication system is a cellular system, there are other cells adjacent to the serving cell. The other cell adjacent to the serving cell is referred to as a neighbor cell. A base station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, a transmitter may be a part of the base station 20, and a receiver may be a part of the UE 10. In the uplink, the transmitter may be a part of the UE 10, and the receiver may be a part of the base station 20.

In a wireless communication system, there are primarily two schemes: frequency division duplex (FDD) scheme and time division duplex (TDD) scheme. In the FDD scheme, uplink transmission and downlink transmission occur on different frequency bands. Conversely, the TDD scheme allows both uplink transmission and downlink transmission to use the same frequency band, but at different times. A key characteristic of the TDD scheme is the substantial reciprocity of the channel response, meaning that the downlink channel response and the uplink channel response are almost identical within a given frequency domain. This reciprocity in TDD-based radio communication systems enables the estimation of the downlink channel response from the uplink channel response. In the TDD scheme, since uplink transmission and downlink transmission are time-divided in the entire frequency band, it is not possible to simultaneously perform downlink transmission by the base station and uplink transmission by the UE. In a TDD system where uplink transmission and downlink transmission are divided into subframe units, uplink transmission and downlink transmission are performed in different subframes.

**FIG. 2 is a diagram illustrating a structure of a radio frame used in new radio (NR).**

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on the subcarrier spacing (SCS). Each slot includes 12 or 14 OFDM(A) symbols according to a Cyclic Prefix (CP). With a normal CP, a slot includes 14 OFDM symbols. With an extended CP, a slot includes 12 OFDM symbols. A symbol may include an OFDM symbol (CP-OFDM symbol) and an SC-FDMA symbol (or DFT-s-OFDM symbol).

**<Support of Various Numerologies>**

As wireless communication technology advances, the NR system may offer various numerologies to terminals. For example, when a subcarrier spacing (SCS) is set at 15 kHz, it supports a broad range of the typical cellular bands. When a subcarrier spacing (SCS) is set at 30 kHz/60 kHz, it supports a dense-urban, lower latency, wider carrier bandwidth. When the SCS is 60 kHz or higher, it supports a bandwidth greater than 24.25 GHz in order to overcome phase noise.

These numerologies may be defined by the cyclic prefix (CP) length and the SCS. A single cell in the NR system is capable of providing multiple numerologies to terminals. Table 2 below shows the relationship between the subcarrier spacing, corresponding CP length, and the index of a numerology (represented by $\mu$).

[Table 2]

| $\mu$ | $\Delta f=2^{\mu}\cdot 15$ [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

Table 3 below shows the number of OFDM symbols per slot ($N^{slot}_{symb}$), the number of slots per frame ($N^{frame,\mu}_{slot}$), and the number of slots per subframe ($N^{subframe,\mu}_{slot}$) according to each numerology expressed by $\mu$ in the case of a normal CP.

[Table 3]

| $\mu$ | $\Delta f=2^{\mu}\cdot 15$ [kHz] | $N^{slot}_{symb}$ | $N^{frame,\mu}_{slot}$ | $N^{subframe,\mu}_{slot}$ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

Table 4 below shows the number of OFDM symbols per slot ($N^{slot}_{symb}$), the number of slots per frame ($N^{frame,\mu}_{slot}$), and the number of slots per subframe ($N^{subframe,\mu}_{slot}$) of a numerology represented by $\mu$ in the case of an extended CP.

[Table 4]

| $\mu$ | SCS $(15*2^{u})$ | $N^{slot}_{symb}$ | $N^{frame,\mu}_{slot}$ | $N^{subframe,\mu}_{slot}$ |
|---|---|---|---|---|
| 2 | 60KHz (u=2) | 12 | 40 | 4 |

In the NR system, OFDM(A) numerologies (e.g., SCS, CP length, and so on) may be configured differently across multiple cells that are integrated with a single terminal. Accordingly, the duration of time resource may vary among these integrated cells. Here, the duration may be referred to as a section. The time resource may include a subframe, a slot or a transmission time interval (TTI). Further, the time resource may be collectively referred to as a time unit (TU) for simplicity and include the same number of symbols.

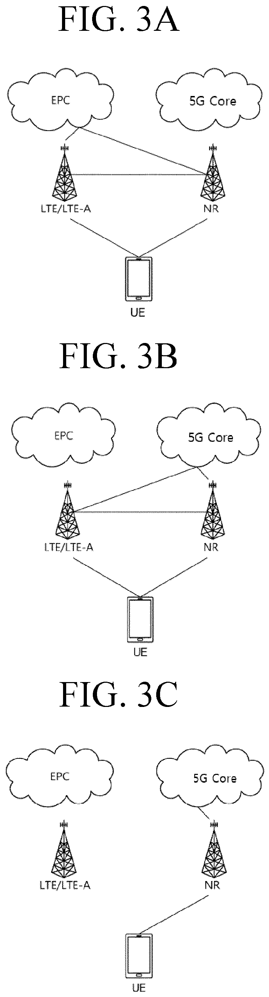

**FIGS. 3A to 3C illustrate exemplary architectures for a wireless communication service.**

Referring to FIG. 3A, a UE is connected in dual connectivity (DC) with an LTE/LTE-A cell and an NR cell.

The NR cell is connected with a core network for the legacy fourth-generation mobile communication, that is, Evolved Packet core (EPC).

Referring to FIG. 3B, the LTE/LTE-A cell is connected with a core network for 5th generation mobile communication, that is, a 5G core network.

A service provided by the architecture shown in FIGS. 3A and 3B is referred to as a non-standalone (NSA) service.

Referring to FIG. 3C, a UE is connected only with an NR cell. A service provided by this architecture is referred to as a standalone (SA) service.

In the new radio access technology (NR), the use of a downlink subframe for reception from a base station and an uplink subframe for transmission to the base station may be employed. This method may be applicable to both paired spectrums and unpaired spectrums. Paired spectrums involve two subcarriers designated for downlink and uplink operations. For example, one subcarrier within a pair of spectrums may include a pair of a downlink band and an uplink band.

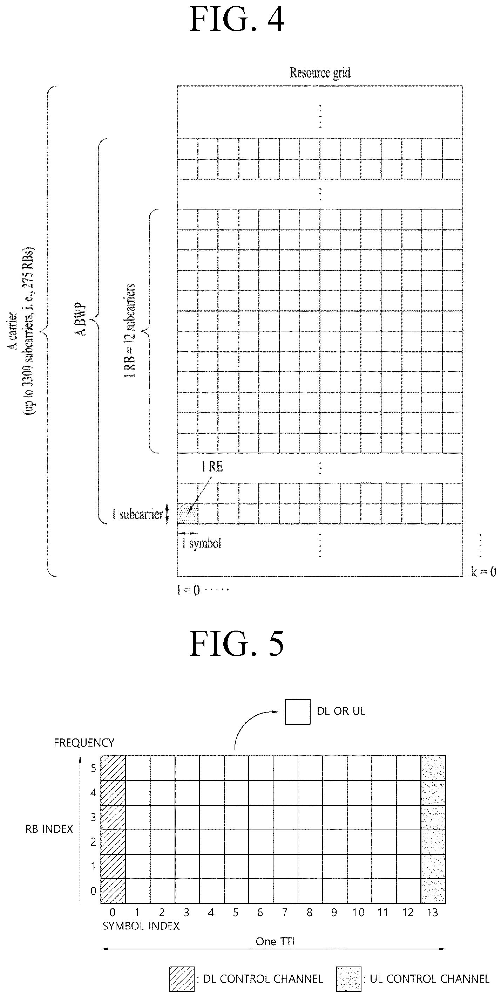

**FIG. 4 illustrates a slot structure of an NR frame.**

A slot in the NR system includes a plurality of symbols in the time domain. For example, in the case of the normal CP, one slot includes seven symbols. On the other hand, in the case of the extended CP, one slot includes six symbols. A carrier includes a plurality of subcarriers in the frequency domain. A resource block (RB) is defined as a set of consecutive subcarriers (e.g., 12 consecutive subcarriers) in the frequency domain. A bandwidth part (BWP) is defined as a sequence of consecutive physical resource blocks (PRBs) in the frequency domain and may be associated with a specific numerology (e.g., SCS, CP length, etc.). A terminal may be configured with up to N (e.g., five) BWPs in each of downlink and uplink. Downlink or uplink transmission is performed through an activated BWP. Among the BWPs configured for the terminal, only one BWP may be activated at a given time. In the resource grid, each element is referred to as a resource element (RE), and one complex symbol may be mapped thereto.

**FIG. 5 shows an example of a subframe type in NR.**

In NR (or new RAT), a Transmission Time Interval (TTI), as shown in FIG. 5, may be referred to as a subframe or slot. The subframe (or slot) may be utilized in a TDD system to minimize data transmission delay. As shown in FIG. 5, a subframe (or slot) includes 14 symbols. The symbol at the head of the subframe (or slot) may be allocated for a DL control channel, and the symbol at the end of the subframe (or slot) may be assigned for a UL control channel. The remaining symbols may be used for either DL data transmission or UL data transmission. This subframe (or slot) structure allows sequential downlink and uplink transmissions in a single subframe (or slot). Accordingly, downlink data may be received in a subframe (or slot) and uplink ACK/NACK may be transmitted in the same subframe (or slot).

Such a subframe (or slot) structure may be referred to as a self-contained subframe (or slot).

The first N symbols in a slot may be used to transmit a DL control channel and referred to as a DL control region, hereinafter. The last M symbols in the slot may be used to transmit a UL control channel and referred to as a UL control region. N and M are integers greater than 0. A resource region between the DL control region and the UL control region may be used for either DL data transmission or UL data transmission and referred to as a data region. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

Using this subframe (or slot) structure reduces the time required for retransmitting data that has failed in reception, thereby minimizing overall data transmission latency. In such a self-contained subframe (or slot) structure, a time gap may be required for transitioning between a transmission mode and a reception mode or from the reception mode to the transmission mode. To accommodate this, a few OFDM symbols when switch from DL to UL in the subframe structure may be configured to a guard period (GP).

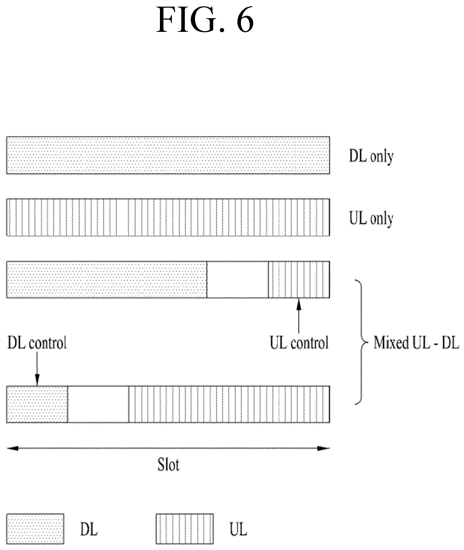

**FIG. 6 illustrates a structure of a self-contained slot.**

In the NR system, the frames are structured as a self-contained structure, where one single slot includes a DL control channel, either a DL or UL data channel, and UL control channel. For example, the first N symbols in a slot may be used for transmitting a DL control channel and referred to as a DL control region. The last M symbols in the slot may be used for transmitting an UL control channel and referred to as a UL control region. N and M are integers greater than 0. A resource region between the DL control region and the UL control region may be used for either DL data transmission or UL data transmission and referred to as a data region.

For example, the following configurations may be considered. The durations are listed in temporal order.

1. DL only configuration
2. UL only configuration
3. Mixed UL-DL configuration

-

## DL region + Guard Period (GP) + UL control region

-

## DL control region + GP + UL region

DL region: (i) DL data region, (ii) DL control region + DL data region

UL region: (i) UL data region, (ii) UL data region + UL control region

A physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Through the PDCCH, Downlink Control Information (DCI), for example, DL data scheduling information or UL data scheduling data may be transmitted. Through the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A guard period (GP) provides a time gap during a process where a gNB and a UE transition from the transmission mode to the reception mode or a process where the gNB and UE transition from the reception mode to the transmission mode. Some of symbols within a subframe that transition from DL to UL mode may be configured as the GP.

### LTM (L1/L2 Triggered Mobility)

The present disclosure relates to L1/L2 Triggered Mobility (LTM) for a terminal.

In 3GPP, standardization of L1/L2 Triggered Mobility (LTM) functions was standardized in release-18 (Rel-18). Hereinafter, L1/L2 Triggered Mobility is referred to as LTM. However, this is only for the convenience of description. The embodiments are not limited thereto. The term "LTM" may alternatively refer to any other terms, such as Layer 1 Mobility, Layer 2 Mobility, and lower layer Mobility. The lower layers denote the physical layer and the MAC layer in the wireless communication protocol stack. Hereinafter, unless otherwise specified, lower layers represent at least one of the physical layer and the MAC layer. 3GPP Rel-18 LTM supported both intra-gNB-Distributed Unit (gNB-DU) mobility and intra-gNB-Central Unit (gNB-CU) mobility. That is, in the prior art, LTM only supported cell changes within a gNB-CU (intra-gNB-CU mobility). Accordingly, it was difficult to support inter-gNB-CU mobility to the corresponding terminal. In addition, LTM according to the prior art is a procedure in which a base station (gNB) receives an L1 measurement report from a user equipment (UE) and, based on this, changes the serving cell (e.g., PCell (Primary Cell)/PSCell (Primary Secondary Cell)) of the UE via a cell switch command signaled through a Medium Access Control (MAC) Control Element (CE). The cell switch command indicates an LTM candidate configuration that the gNB has prepared in advance and provided to the UE through Radio Resource Control (RRC) signaling. Then, the UE switches to the target cell according to the cell switch command. As such, LTM in the prior art is a network-based cell switching procedure based on a network decision. Therefore, while the network receives the L1 measurement report, decides on LTM, and transmits the LTM cell switch MAC CE, it was vulnerable to failures due to radio link fluctuations.

Here, the aforementioned gNB-CU represents a logical node that hosts the Radio Resource Control (RRC), Service Data Adaptation Protocol (SDAP), and Packet Data Convergence Protocol (PDCP) layers of a base station (or a logical node that hosts one or more of the higher-layer radio access protocols). To support efficient network deployment, NR provides a structure that separates a base station (gNB) into a centralized node (hereinafter referred to as CU/gNB-CU for convenience) and a distributed node (hereinafter referred to as DU/gNB-DU for convenience). The radio network includes base stations connected to the 5G Core network (5GC) via the NG interface. The base stations are interconnected via the Xn interface. One base station may consist of one gNB-CU and one or more gNB-DUs. The gNB-CU and gNB-DU are connected via the F1 interface. One gNB-DU may be connected to only one gNB-CU. The NG interface and the Xn-C interface for one base station including a gNB-CU and a gNB-DU are terminated at the gNB-CU. The gNB-DUs connected to the gNB-CU appears as a single base station to other base stations and the 5GC. The gNB-DU is a logical node that hosts the Radio Link Control (RLC), Medium Access Control (MAC), and Physical (PHY) layers of a base station (or a logical node that hosts one or more of the radio access protocols not included in the gNB-CU). One gNB-DU supports one or a plurality of cells. One cell is supported by only one gNB-DU.

As described above, the typical LTM was a network-based mobility support technology that only supported mobility within an intra-gNB-CU. Accordingly, radio link failures could be triggered due to delays occurring in the cell switch decision process, and mobility between different base stations was unsupported. The present disclosure, devised to solve these problems, proposes a method and apparatus for controlling execution conditions and processing terminal configuration to support UE-based Conditional LTM.

Hereinafter, a method for providing mobility based on 5G NR radio access technology will be described in detail. However, this is for convenience of explanation, and the present disclosure may also be applied to cell change/switch based on any radio access technology (e.g., 6G). The embodiments described in the present disclosure may refer to the information elements, procedures, and operation contents specified in the NR specifications (e.g., TS 38.321 for NR MAC specification, TS 38.331 for NR RRC specification). Even if the definitions of the corresponding information elements, related procedures, and related terminal operation contents are not described in this specification, the corresponding contents specified in the known standard specifications are deemed incorporated herein by reference. The embodiments provided below may be implemented individually or by variously combining each embodiment, and such variations are also within the scope of the present disclosure.

Any function described below may be defined as an individual UE radio capability or UE Core network capability and may be transmitted by the UE to a base station/core network entity (e.g., Access and Mobility Management Function (AMF)/Session Management Function (SMF)) through corresponding signaling. Alternatively, any functions may be combined and defined as a corresponding UE capability and transmitted to the base station/core network entity through corresponding signaling upon a request from the base station.

The base station may transmit/indicate to the terminal via an RRC message information regarding the allowance/support/configuration/activation state of any function or any combination of functions described below. For example, the base station may indicate this to the terminal (e.g., UE) before or after the configuration/application of the corresponding function/function combination, or simultaneously with the configuration/application of the corresponding function/function combination. The corresponding RRC message may be broadcast via system information. Alternatively, the corresponding RRC message may be delivered to the terminal via a dedicated RRC message.

**First Disclosure**

Defining terminal variables (e.g., UE variables) for conditional LTM

The network may configure the terminal (e.g. UE) with one or more conditional LTM candidate configurations within a conditional LTM configuration information element. The corresponding conditional LTM configuration may be associated with either the MCG or the SCG. The terminal may add/modify/release/store the received conditional LTM candidate configuration in the terminal.

As an example, when a terminal (e.g. UE) receives a conditional LTM candidate configuration, it may maintain the corresponding conditional LTM configuration information element. When a terminal receives a conditional LTM candidate configuration, it may maintain a specific terminal variable associated with the corresponding conditional LTM configuration. The specific terminal variable associated with the conditional LTM configuration may be at least one of index information for indicating/determining RLC reset in the serving cell, index information for indicating/determining PDCP reset (and/or security key update) in the serving cell, index information for indicating/determining UE-based TA (Timing Advance) measurement in the serving cell, a reference configuration, and a security key configuration.

If the received conditional LTM configuration includes index information for indicating/determining RLC reset in the serving cell, or if the terminal variable for the index information for indicating/determining RLC reset in the current serving cell includes index information for indicating/determining RLC reset in the serving cell, the value of the index information for indicating/determining RLC reset in the serving cell within the terminal variable for the index information for indicating/determining RLC reset in the serving cell may be replaced with (or updated with) the received index information for indicating/determining RLC reset in the serving cell. Otherwise, the received index information for indicating/determining RLC reset in the serving cell may be stored/added within the terminal variable for the index information for indicating/determining RLC reset in the serving cell.

If the received conditional LTM configuration includes index information for indicating/determining PDCP reset (and/or security key update) in the serving cell, or if the terminal variable for the index information for indicating/determining PDCP reset (and/or security key update) in the current serving cell includes index information for indicating/determining PDCP reset (and/or security key update) in the serving cell, the value of the index information for indicating/determining PDCP reset (and/or security key update) in the serving cell within the terminal variable for the index information for indicating/determining PDCP reset (and/or security key update) in the serving cell may be replaced with the received index information for indicating/determining PDCP reset (and/or security key update) in the serving cell. Otherwise, the received index information for indicating/determining PDCP reset (and/or security key update) in the serving cell may be stored/added within the terminal variable for the index information for indicating/determining PDCP reset (and/or security key update) in the serving cell.

If the received conditional LTM configuration includes index information for indicating/determining UE-based TA measurement in the serving cell, or if the terminal variable for the index information for indicating/determining UE-based TA measurement in the current serving cell includes index information for indicating/determining UE-based TA measurement in the serving cell, the value of the index information for indicating/determining UE-based TA reset in the serving cell within the terminal variable for the index information for indicating/determining UE-based TA measurement in the serving cell may be replaced with the received index information for indicating/determining UE-based TA measurement in the serving cell. Otherwise, the received index information for indicating/determining UE-based TA measurement in the serving cell may be stored/added within the terminal variable for the index information for indicating/determining UE-based TA measurement in the serving cell.

If the received conditional LTM configuration includes a list of conditional LTM candidate configurations to be added/modified (e.g., conditional-ltm-candidate-AddModList), the terminal may perform addition/modification of the Conditional LTM candidate configuration. For example, for each piece of information for identifying a conditional LTM candidate/candidate configuration/candidate cell included in the list information for the conditional LTM candidate configuration to be added/modified (e.g., conditional-ltm-candidate-AddModList), if the current terminal configuration includes a conditional LTM candidate configuration with a value of the information for identifying the conditional LTM candidate/candidate configuration/candidate cell, the terminal reconfigures the conditional LTM candidate configuration of that terminal with the received conditional LTM candidate configuration. Otherwise, it adds the received conditional LTM candidate configuration.

If the received conditional LTM candidate configuration with the value of the information for identifying each conditional LTM candidate/candidate configuration/candidate cell includes index information for indicating/determining UE-based TA measurement, or if the value of the index information for indicating/determining UE-based TA measurement is the same as the value of the received index information for indicating/determining UE-based TA measurement in the serving cell within the terminal variable for the index information for indicating/determining UE-based TA measurement in the serving cell, the terminal may inform the lower layer that the terminal is configured with UE-based TA measurement for the corresponding conditional LTM candidate configuration. Otherwise, it may inform that the terminal is not configured with UE-based TA measurement for the corresponding conditional LTM candidate configuration.

If the received conditional LTM configuration includes a list of conditional LTM candidate configurations to be released (e.g., conditional-ltm-candidate-ReleaseList), the terminal may perform the release of the conditional LTM configuration.

The terminal may reconfigure itself according to all other fields within the received conditional LTM configuration.

In this way, the terminal may replace/add/store the value of the corresponding terminal variable based on the received conditional LTM configuration IE (information element) only for the specific terminal variable associated with the conditional LTM configuration and reconfigure the terminal according to the received configuration for other fields.

In another embodiment, when a terminal receives a conditional LTM candidate configuration, it may maintain a terminal variable to store/add/modify/release the corresponding conditional LTM configuration information element. Hereinafter, for convenience of explanation, the corresponding terminal variable is denoted as a conditional LTM configuration terminal variable.

For each piece of information for identifying a conditional LTM candidate/candidate configuration/candidate cell received from the base station in the list information for the conditional LTM candidate configuration to be added/modified (e.g., conditional-ltm-candidate-AddModList/ltm-candidate-AddModList), if there is matching information for identifying a conditional LTM candidate/candidate configuration/candidate cell in the list information for the conditional LTM candidate configuration to be added/modified within the conditional LTM terminal variable, or if an entry in the list information for the conditional LTM candidate configuration to be added/modified (e.g., conditional-ltm-candidate-AddModList/ltm-candidate-AddModList) includes a conditional LTM execution condition (or trigger condition), replace the conditional LTM execution condition in the conditional LTM configuration terminal variable with the received value for the information for identifying the conditional LTM candidate/candidate configuration/candidate cell. Otherwise, add a new entry to the conditional LTM execution condition in the conditional LTM configuration terminal variable with the received value for the information for identifying the conditional LTM candidate/candidate configuration/candidate cell.

For each piece of information for identifying a conditional LTM candidate/candidate configuration/candidate cell received from the base station in the list information for the conditional LTM candidate configuration to be added/modified (e.g., conditional-ltm-candidate-AddModList/LTM-candidateConfig), if an entry in the list information for the conditional LTM candidate configuration to be added/modified (e.g., conditional-ltm-candidate-AddModList) includes information for indicating the corresponding conditional LTM candidate configuration via an RRC reconfiguration message/container/information element (e.g., conditional-LTM-candidateConfig/LTM-candidateConfig), replace the information for indicating the conditional LTM candidate configuration in the conditional LTM configuration terminal variable (e.g., conditional-LTM-candidateConfig/LTM-candidateConfig) with the received value for the information for identifying the conditional LTM candidate/candidate configuration/candidate cell. Otherwise, for the information for identifying the conditional LTM candidate/candidate configuration/candidate cell, add a new entry in the conditional LTM configuration terminal variable.

If the received conditional LTM configuration includes index information for indicating/determining RLC reset in the serving cell, or if the terminal variable for the index information for indicating/determining RLC reset in the current serving cell includes index information for indicating/determining RLC reset in the serving cell, the value of the index information for indicating/determining RLC reset in the serving cell within the terminal variable for the index information for indicating/determining RLC reset in the serving cell may be replaced with (e.g., updated with) the received index information for indicating/determining RLC reset in the serving cell. Otherwise, the received index information for indicating/determining RLC reset in the serving cell may be stored/added within the terminal variable for the index information for indicating/determining RLC reset in the serving cell.

If the received conditional LTM configuration includes index information for indicating/determining PDCP reset (and/or security key update) in the serving cell, or if the terminal variable for the index information for indicating/determining PDCP reset (and/or security key update) in the current serving cell includes index information for indicating/determining PDCP reset (and/or security key update) in the serving cell, the value of the index information for indicating/determining PDCP reset (and/or security key update) in the serving cell within the terminal variable for the index information for indicating/determining PDCP reset (and/or security key update) in the serving cell may be replaced with (e.g., updated with) the received index information for indicating/determining PDCP reset (and/or security key update) in the serving cell. Otherwise, the received index information for indicating/determining PDCP reset (and/or security key update) in the serving cell may be stored/added within the terminal variable for the index information for indicating/determining PDCP reset (and/or security key update) in the serving cell.

If the received conditional LTM configuration includes index information for indicating/determining UE-based TA measurement in the serving cell, or if the terminal variable for the index information for indicating/determining UE-based TA measurement in the current serving cell includes index information for indicating/determining UE-based TA measurement in the serving cell, the value of the index information for indicating/determining TA reset in the serving cell within the terminal variable for the index information for indicating/determining UE-based TA measurement in the serving cell may be replaced with (e.g., updated with) the received index information for indicating/determining UE-based TA measurement in the serving cell. Otherwise, the received index information for indicating/determining UE-based TA measurement in the serving cell may be stored/added within the terminal variable for the index information for indicating/determining UE-based TA measurement in the serving cell.

Conditional LTM execution condition (or trigger condition)

To support conditional LTM, it may be necessary to specifically determine how to configure the conditional LTM execution condition. The conditional LTM execution condition (e.g., conditional-ltm-Execution-condition) may be included in a conditional LTM candidate (e.g., conditional-ltm-candidate/ltm-candidate) information element. For example, it may be included along with a conditional LTM candidate identifier (e.g., conditional-ltm-candidate-ID/ltm-candidate-ID) and a conditional LTM candidate configuration (e.g., conditional-ltm-CandidateConfig/ltm-CandidateConfig) information element within the conditional LTM candidate information element, so that the corresponding conditional LTM candidate configuration is executed/applied when the corresponding execution condition is fulfilled/satisfied. The conditional LTM execution condition may be configured in association with the LTM CSI measurement configuration and/or the LTM CSI reporting configuration (or LTM CSI report configuration) for LTM to simplify the configuration and indicate it to the terminal.

As an example, if the execution condition is to be evaluated based on L3 measurements in conditional LTM, the execution condition included in the conditional LTM candidate configuration may be configured in association with any information included in a measurement configuration information element (measconfig: The IE MeasConfig specifies measurements to be performed by the UE, and covers intra-frequency, inter-frequency and inter-RAT mobility as well as configuration of measurement gaps) that specifies the L3 measurements performed by the UE, for example, a measurement identifier (meas ID: The IE MeasId is used to identify a measurement configuration, i.e., linking of a measurement object and a reporting configuration).

For another example, if L3 measurements are to be used together with L1 measurements when evaluating the execution condition in conditional LTM, the execution condition included in the conditional LTM candidate configuration may be configured in association with a measurement identifier included in the measurement configuration (measconfig).

For another example, if L1 measurements are to be used when evaluating the execution condition in conditional LTM, the execution condition included in the conditional LTM candidate configuration may not be configured in association with a measurement identifier included in the measurement configuration (measconfig).

For another example, if L1 measurements are to be used when evaluating the execution condition in conditional LTM, the execution condition included in the conditional LTM candidate configuration may be configured in association with the corresponding measurement identifier included in a channel state information (CSI) measurement configuration information element that specifies the L1 measurements performed by the UE.

For another example, the CSI measurement configuration information element specifying L1 measurements may represent conditional LTM CSI resource configuration information. The CSI measurement configuration information element specifying L1 measurements may be associated with an identifier (e.g., conditiona-LTM-CSI-Resource-Config-ID/LTM-CSI-Resource-Config-ID) included in a conditional LTM CSI resource configuration/configuration list (e.g., conditional-LTM-CSI-Resource-Configuration/LTM-CSI-Resource-Configuration). The CSI measurement configuration information element specifying L1 measurements or the conditional LTM CSI resource configuration information may be included in a conditional LTM configuration (e.g., conditional-LTM-Config/LTM-Config) or a conditional LTM candidate (e.g., conditional-ltm-candidate/ltm-candidate) information element.

For another example, if L1 measurements are to be used when evaluating the execution condition in conditional LTM, the execution condition included in the conditional LTM candidate configuration may be configured by associating an identifier for identifying the corresponding measurement resource configuration (e.g., ltm-CSI-ResourceConfigId or conditional ltm-CSI-ResourceConfigId) included in an LTM CSI resource configuration (e.g., LTM-CSI-ResourceConfig: The IE LTM-CSI-ResourceConfig defines a group of one or more CSI resources for one or more LTM candidate configurations/conditional LTM candidate configuration.)/conditional-CSI-report-config (e.g., LTM-CSI-report-config: The IE LTM-CSI-ReportConfig is used to configure report on the cell in which the LTM-CSI-ReportConfig is included or to configure execution condition in conditional LTM) performed by the UE, with an identifier for identifying the report configuration. For example, it may be configured in association with an LTM CSI report configuration identifier (e.g., ltm-CSI-ReportConfigId) or a conditional LTM CSI report configuration identifier (e.g., conditional ltm-CSI-ReportConfigId).

For another example, if L1 measurements and/or L3 measurements are to be used when evaluating the execution condition in conditional LTM, the execution condition included in the conditional LTM candidate configuration may be selectively configured in association with a measurement identifier included in the measurement configuration (measconfig) and/or an identifier for identifying a measurement resource configuration (e.g., ltm-CSI-ResourceConfigId or conditional ltm-CSI-ResourceConfigId), an LTM CSI report configuration identifier (e.g., ltm-CSI-ReportConfigId), or a conditional LTM CSI report configuration identifier (e.g., conditional ltm-CSI-ReportConfigId). For example, the execution condition of conditional LTM may be configured by selecting only one of L1 measurement or L3 measurement.

For another example, a base station may indicate/configure LTM L1 measurement/reporting to a terminal. If the information for indicating/configuring LTM L1 measurement/reporting to the terminal includes at least one of information for identifying LTM L1 measurement/measurement configuration/measurement resource/measurement resource configuration, and information for identifying LTM L1 report/report configuration, the conditional LTM execution condition may be associated with at least one of information for identifying LTM L1 measurement/measurement configuration/measurement resource/measurement resource configuration and information for identifying LTM L1 report/report configuration.

For another example, a base station may indicate/configure conditional LTM L1 measurement/reporting to a terminal. If the information for indicating/configuring conditional LTM L1 measurement/reporting to the terminal includes at least one of information for identifying conditional LTM L1 measurement/measurement configuration/measurement resource/measurement resource configuration, and information for identifying conditional LTM L1 report/report configuration, the conditional LTM execution condition may be associated with at least one of information for identifying conditional LTM L1 measurement/measurement configuration/measurement resource/measurement resource configuration and information for identifying conditional LTM L1 report/report configuration.

For another example, an LTM L1 measurement (result) report/reporting may be indicated to the base station via L1 signaling. And/or an LTM L1 measurement (result) report/reporting may be indicated to the base station via L2 signaling (e.g., MAC CE). The LTM L1 report configuration information via L1 signaling and/or L2 signaling may include report type information as sub-configuration information. The corresponding report type information may include at least one of a periodic report/report configuration, an event-triggered report/report configuration, and a conditional trigger execution condition/configuration. The conditional trigger execution condition/configuration may include LTM event ID (or L1 event ID or conditional event ID) information. The corresponding LTM event ID may be associated with/mapped to one or more of event LTM2, event LTM3, event LTM4, event LTM5. (or it may be selected from among event LTM2, event LTM3, event LTM4, and event LTM5). The conditional trigger execution condition/configuration may include RS (reference signal) type information.

The conditional trigger execution condition/configuration may be associated with an L1 measurement. The L1 measurement information may include CSI resource configuration information. It may also include the corresponding RS type information. For example, one RS type may be selected from SS/PBCH block and CSI-RS.

For another example, the conditional LTM execution condition may be included as a sub-information element of a conditional LTM candidate information element. For example, the conditional LTM candidate information element may include a conditional LTM candidate ID, a conditional LTM execution condition, and a conditional LTM candidate configuration information element as sub-information elements so that the corresponding conditional LTM candidate configuration is executed when the corresponding execution condition is fulfilled/satisfied.

For another example, the conditional LTM execution condition may be configured in association with an L1 measurement event (e.g., event LTM2, event LTM3, event LTM4, or event LTM5).

For another example, an LTM measurement resource configuration (or conditional LTM measurement resource configuration) may be included in an LTM configuration (or conditional LTM configuration). For example, the measurement resource configuration may be provided by including an LTM CSI resource configuration/configuration list (or conditional LTM CSI resource configuration/configuration list) as a sub-information element within the LTM configuration (conditional LTM configuration). The LTM CSI resource configuration/configuration list (or conditional LTM CSI resource configuration/configuration list) may be configured in association with an L1 measurement event (e.g., event LTM2, event LTM3, event LTM4, or event LTM5). For example, the LTM CSI resource configuration (or conditional LTM CSI resource configuration) may include at least one of an LTM CSI resource configuration identifier (or conditional LTM CSI resource configuration identifier), an LTM-CSI-SSB-resource set, an LTM-CSI-RS-resource set, and an LTM event ID (or L1 event ID or conditional event ID). The LTM-CSI-SSB-resource set (or LTM-CSI-RS-resource set) may include one or more LTM-CSI-SSB resource lists (SSB index) (or LTM-CSI-RS-resource lists (CSI-RS Resource Indicator, CRI)).

For another example, an L1 measurement event (e.g., event LTM2, event LTM3, event LTM4, or event LTM5) may be associated within an LTM CSI report configuration/configuration list (or conditional LTM CSI report configuration/configuration list). The conditional LTM execution condition may be associated with an L1 measurement event (e.g., event LTM2, event LTM3, event LTM4, or event LTM5) via the LTM CSI report configuration/configuration list (or conditional LTM CSI report configuration/configuration list). For example, the LTM CSI report configuration/configuration list (or conditional LTM CSI report configuration/configuration list) may be included in a ServingCellConfig (The IE ServingCellConfig is used to configure (add or modify) the UE with a serving cell, which may be the SpCell or an SCell of an MCG or SCG). For example, it may be included as ltm-CSI-ReportConfig information in CSI-MeasConfig included in ServingCellConfig. Through this, the Conditional LTM execution condition of the serving cell may be associated with an L1 measurement event (e.g., event LTM2, event LTM3, event LTM4, and/or event LTM5). The LTM CSI report configuration (or conditional LTM CSI reporting configuration) may include at least one of an LTM CSI report configuration identifier (or conditional LTM CSI report configuration identifier), an LTM report configuration type (or conditional LTM report configuration type), an LTM report content (or LTM report content), and an LTM event ID (or L1 event ID or conditional event ID). One CSI report configuration may be associated with/mapped to one set of RS resources via an LTM-CSI-resource configuration identifier.

For another example, the LTM report configuration type (or conditional LTM report configuration type) may include the Conditional LTM execution condition as a sub-information element. The conditional LTM execution condition may include an LTM event ID (or L1 event ID or conditional LTM event ID) as a sub-information element.

For another example, the execution condition of a conditional LTM candidate configuration may be configured for the terminal via an L1 measurement-based event. When evaluating the conditional LTM execution condition, an L1 measurement-based event that uses beam level measurements may be defined and utilized as conditional event information. For example, an event-triggered event included in the LTM report configuration type may be associated with the following L1 measurement-based event information. (or may include at least one of the following)

- Event LTM2: Beam of serving cell becomes worse than an absolute threshold.
- Event LTM3: Beam of candidate cell becomes an amount of offset better than the beam of the serving cell.
- Event LTM4: Beam of serving cell becomes better than an absolute threshold.
- Event LTM5: Beam of serving cell becomes worse than absolute threshold1 AND beam of candidate cell becomes better than another absolute threshold2.

For another example, when evaluating the conditional LTM execution condition, an L1 measurement-based event that uses beam level measurements may be defined and utilized as conditional event information. The conditional LTM execution condition may be associated with the following conditional L1 measurement-based event information. (or the event included in the conditional LTM execution condition may include at least one of the following)

- conditional EventLTM2: Beam of serving cell becomes worse than an absolute threshold.
- conditional Event LTM3: Beam of candidate cell becomes an amount of offset better than the beam of the serving cell.
- conditional Event LTM4: Beam of serving cell becomes better than an absolute threshold.
- conditional Event LTM5: Beam of serving cell becomes worse than absolute threshold1 AND beam of candidate cell becomes better than another absolute threshold2.

For another example, the conditional LTM configuration may include an L1 measurement resource configuration. The corresponding L1 measurement resource configuration may support both SSB and CSI-RS. For event LTM3 (and/or conditional event LTM3) and event LTM5 (and/or conditional event LTM5) included in the conditional LTM execution condition, the same RS type may be used for both the serving cell and the candidate cell.

For another example, for the evaluation of the conditional LTM execution condition in the serving cell, a beam (current beam) corresponding to a TCI (Transmission Configuration Indicator) state indicated by the base station may be used. The current beam refers to the current serving beam indicated by the TCI state in the most recent scheduling DCI used for the current transmission. For example, if multiple TCI states are activated, the DCI may select one of the activated TCI states. If only one TCI state is activated, that activated TCI state may be selected.

For another example, for the evaluation of the conditional LTM execution condition in a candidate cell, any beam within the candidate RS configuration may be used. For example, in evaluating the LTM execution condition, for an LTM candidate cell indicated by an LTM candidate configuration, all beams associated with an LTM-CSI-ResourceConfigId that is associated with an LTM-CSI-ReportConfigId may be considered as applicable beams. The RS/resource/resource set for the candidate cell beam may be configured via RRC. Or it may be implicitly derived from the QCL (Quasi-Co-Location) RS/resource/resource set of the activated TCI state(s). Or it may be implicitly derived from the QCL RS/resource/resource set of the TCI state(s) within a configured subset of the TCI state list configured by RRC.

For another example, conditional LTM may be executed when an L1 measurement-based event information and an L3 measurement-based event are simultaneously fulfilled/satisfied. The terminal evaluates the condition of the configured candidate/target cell/serving cell. If one of the candidate/target cells/special cells fulfills/satisfies the corresponding execution condition, the terminal may apply the conditional LTM configuration associated with the corresponding candidate/target cell/special cell.

For another example, for the execution condition evaluation of a single conditional LTM candidate cell, only a single RS type may be supported. This may simplify the candidate cell execution condition evaluation.

For another example, for the execution condition evaluation of a single conditional LTM candidate cell, at least one RS type may be supported. This enables for evaluating the execution condition of the candidate cell considering LTM characteristics. For example, at least one RS type among SS/PBCH block and CSI-RS may be supported.

For another example, if the execution condition for conditional LTM is used in association with an LTM CSI report configuration (or conditional LTM CSI reporting configuration), an L1 report (e.g., CSI report) should not be triggered or transmitted when the execution condition included in the corresponding report configuration is satisfied. When the corresponding execution condition is fulfilled/satisfied, the terminal must execute the conditional LTM cell switch. Therefore, if it tries to send a CSI report to the source/serving base station with priority, interruption may occur due to this. To prevent this, for the LTM CSI resource configuration (or its corresponding terminal variable) and/or the LTM CSI report configuration (or its corresponding terminal variable) configured/stored in the terminal, an evaluation of the reporting criteria may be performed except when the LTM-CSI-report configuration (or the LTM-CSI-report type included in the LTM-CSI-report configuration) is an LTM execution condition. The base station may indicate to the terminal that a specific LTM-CSI-report configuration is for a conditional LTM candidate cell associated with a conditional LTM execution condition. The base station may indicate to the terminal that another LTM-CSI-report configuration is for an LTM candidate cell not associated with a conditional LTM execution condition. The base station may configure the LTM-CSI-report configuration to include information for identifying an LTM candidate information element associated with a conditional LTM execution condition (conditional-ltm-candidateID/ltm-candidateID), thereby indicating that measurement and event evaluation for L1/L2 measurement report triggering are required within that LTM-CSI-report configuration. If information for identifying an LTM candidate information element associated with an LTM-CSI-report configuration (conditional-ltm-candidateID/ltm-candidateID) is not included, the terminal may consider that measurement and event evaluation for L1/L2 measurement report triggering are not required for the corresponding LTM candidate cell. For example, if the LTM-CSI-report configuration (or the LTM-CSI-report type included in the LTM-CSI-report configuration) is a conditional LTM execution condition, the terminal may execute conditional LTM when any event (or all events) included in the corresponding conditional LTM execution condition is triggered/fulfilled/satisfied. The terminal may not transmit a MAC CE including the corresponding event-triggered L1-measurements/measurement results to the base station. If the LTM-CSI-report configuration (or the LTM-CSI-report type included in the LTM-CSI-report configuration) is event-triggered and any event (or all events) included in the corresponding event-triggered configuration is triggered/fulfilled/satisfied, the terminal may execute conditional LTM. The terminal may not transmit a MAC CE including the corresponding event-triggered L1-measurements/measurement results to the base station. For example, it may not initiate reporting of the MAC CE including the corresponding event-triggered L1-measurements/measurement results. Or, the terminal may reset the corresponding MAC entity by executing conditional LTM as the corresponding execution condition is fulfilled. Since the event-triggered L1-measurements reporting is released/removed, the MAC CE reporting including the corresponding event-triggered L1-measurements/measurement results may not be performed. Or, the base station may configure the LTM-CSI-report configuration to instruct not to initiate MAC CE reporting including the corresponding event-triggered L1-measurements/measurement results for a specific candidate cell.

If the LTM-CSI-report configuration (or the LTM-CSI-report type included in the LTM-CSI-report configuration) is event-triggered, the terminal may transmit a MAC CE including the corresponding event-triggered L1-measurements/measurement results to the base station when any event (or all events) included in the corresponding conditional LTM execution condition is triggered/fulfilled/satisfied. For example, it may initiate reporting of the MAC CE including the corresponding event-triggered L1-measurements/measurement results.

**Second Disclosure**

To support UE-based LTM, a base station must be able to configure a terminal (e.g., UE) to execute LTM when one or more LTM execution condition or trigger conditions are satisfied at the terminal. For convenience of explanation, the RRC container/message/information element for indicating configuration is referred to as a conditional LTM configuration. This is for convenience of explanation only and may be replaced by any other term (e.g., UE based LTM, autonomous LTM, conditional-LTM-config, or conditional-LTM-reconfiguration).

The conditional LTM configuration may be defined or used as an RRC container/message/information element directly included in an RRC reconfiguration message (e.g., RRCReconfiguration).

As an example, as in Table 5, by allowing the base station to set and transmit the corresponding RRC container/information element as setup or release, the terminal (e.g., UE) may add/modify/release the corresponding terminal variable stored in the terminal based on the setup/release information. For example, if the corresponding RRC container/information element is set to setup, the terminal may perform conditional LTM configuration. Otherwise (if set to release), the terminal may perform conditional LTM release. The terminal may remove entries in the conditional LTM terminal variable (e.g., index information for indicating/determining RLC reset in the serving cell, index information for indicating/determining UE-based TA measurement in the serving cell (UE-measuredTA-ID), and/or index information for indicating/determining PDCP reset (and/or security key update) in the serving cell). That is, the terminal may release the conditional LTM configuration.

For another example, the base station may transmit the corresponding RRC container/information element without setting it to setup or release. If this information is included, the conditional LTM configuration (conditional-ltm-config) RRC container/information element may be applied. That is, the sub-parameters included in the corresponding RRC container/information element may be configured.

For another example, the conditional LTM configuration may be defined/used as an inter-node RRC container/message/information element included in an XnAP (Xn Application Protocol) message (e.g., a handover request and/or handover request ack) between base stations. The conditional LTM configuration may be defined/used as an (XnAP) information element included in an XnAP message between base stations.

For another example, a conditional LTM configuration may be for a cell switch within a single base station/base station-CU. To eliminate complexity, the conditional LTM configuration may be configured by only one of either the MCG (Master Cell Group) or the SCG (Secondary Cell Group). For example, for a terminal configured with dual connectivity, the base station may prevent a conditional LTM configuration associated with the MCG and a conditional LTM configuration associated with the SCG from being configured/applied/executed simultaneously. The network/base station may have the terminal configured with only one candidate target special cell for the conditional LTM configuration. The conditional LTM configuration may have candidate cell(s) provided by only one of either the MCG or the SCG of the corresponding terminal. The base station may allow the terminal to be configured with only one of either the conditional LTM configuration associated with the MCG or the conditional LTM configuration associated with the SCG. For example, the base station may allow the conditional LTM execution condition to be included only in the LTM configuration associated with the MCG. The base station may restrict the terminal from being simultaneously configured with the conditional LTM configuration associated with the MCG and the conditional LTM configuration associated with the SCG.

For another example, if a terminal maintains a conditional LTM configuration (or LTM configuration) associated with the MCG (or SCG) and receives a conditional LTM configuration (or LTM configuration) associated with the SCG (or MCG) from the base station, it may release/suspend the previous configuration.

For another example, the network/base station may have the terminal configured such that one conditional LTM candidate configuration included within a conditional LTM configuration has only one candidate target special cell. For example, the conditional LTM candidate configuration may have a candidate cell provided by only one of the MCG or the SCG. The base station may have the terminal configured with only one of either the conditional LTM candidate configuration from the MCG or the conditional LTM candidate configuration from the SCG. The base station may restrict the terminal from being simultaneously configured with the conditional LTM candidate configuration from the MCG and the conditional LTM candidate configuration from the SCG.

For another example, in dual connectivity (e.g., NR-DC), a terminal may receive two independent conditional LTM configurations at different times. One is a conditional LTM configuration associated with the MCG, which may be received via an RRC reconfiguration message through SRB1 (Signaling Radio Bearer 1). The other is a conditional LTM configuration associated with the SCG, which may be received via an RRC reconfiguration message through SRB3 or SRB1. The corresponding conditional LTMs may be performed independently. Only the conditional LTM associated with one of the MCG and the SCG may be applied/executed. Indication information for this may be indicated (e.g., sent) from the base station to the terminal. When the master base station (or secondary base station) configures/indicates the conditional LTM associated with the MCG (or SCG) to the terminal, it may indicate information for indicating this to the secondary base station (or master base station) via an XnAP message.

For another example, the conditional LTM configuration information shall include a conditional LTM candidate configuration/configuration list for a plurality of candidate/target base stations/cells. For example, the conditional LTM configuration information may be made to include list information for a conditional LTM candidate configuration to be added/modified (e.g., conditional-ltm-candidate-AddModList). The conditional LTM configuration information may be made to include list information for a conditional LTM candidate configuration to be released (e.g., conditional-ltm-candidate-ReleaseList). Through this, a plurality of (e.g., up to 8) conditional LTM candidate configurations may be added/modified/released.

For another example, the conditional LTM configuration information may include reference configuration information (Conditional LTM reference configuration). The Conditional LTM reference configuration may represent a common configuration within the same cell group for configured incomplete conditional LTM candidate configurations. The Conditional LTM reference configuration may be used by the terminal to generate a complete conditional LTM candidate configuration by applying a conditional LTM candidate configuration on top of the Conditional LTM reference configuration. This allows for effective handling of common configurations. The conditional LTM candidate configuration represents a configuration associated with one conditional LTM candidate cell. The conditional LTM candidate configuration may be indicated as a complete conditional LTM candidate configuration or as a delta/difference configuration with respect to the Conditional LTM reference configuration. The Conditional LTM reference configuration may include an RRC reconfiguration container/message/information element.

For another example, to support conditional LTM, the conditional LTM configuration information may indicate a plurality of conditional LTM candidate configurations between one or more base stations using/including a single conditional LTM reference configuration. The source/serving base station/base station-CU/CG (cell group) may receive/collect a plurality of candidate configurations based on one conditional LTM reference configuration (indicated by the source/serving base station) from a plurality of candidate base stations/base station-CUs/CGs. The source/serving base station/base station-CU/CG may transmit common configuration information based on one conditional LTM reference configuration to the plurality of candidate base stations/ base station-CUs/CGs to support subsequent LTM. The candidate base station/base station-CU/CG may transmit an acknowledgment/response message for this to the source base station/base station-CU/CG.

For another example, to effectively support conditional LTM between a plurality of base stations, the conditional LTM configuration information may indicate a plurality of conditional LTM candidate configurations using/including a plurality of conditional LTM reference configurations. Each base station/base station-CU/CG may generate/use/include a single conditional LTM reference configuration for each respective base station/base station-CU/CG and transmit it to the source/serving base station. The source/serving base station/base station-CU/CG may receive/collect a plurality of candidate configurations based on the conditional LTM reference configuration from the plurality of candidate base stations/base station-CUs/CGs. The source/serving base station/base station-CU/CG may transmit common configuration information to the plurality of candidate base stations/base station-CUs/CGs to support subsequent LTM. The candidate base station/base station-CU/CG may transmit an acknowledgment/response message for this to the source base station/base station-CU/CG.

For another example, the conditional LTM configuration information may include information for instructing the terminal to perform a conditional LTM cell switch (or conditional LTM reconfiguration) during an RRC reset procedure for a terminal for which a conditional LTM configuration is configured.

For another example, the conditional LTM configuration information may include index information for indicating/determining a UE-based TA measurement in the serving cell. The terminal stores the received index information for indicating/determining the UE-based TA (timing advance) measurement in the serving cell in its corresponding terminal variable (if the corresponding terminal variable currently includes the information, it replaces the value). If the conditional LTM candidate configuration includes index information for indicating/determining a UE-based TA measurement for the corresponding candidate cell, and the value of the index information for indicating/determining the UE-based TA measurement for the corresponding conditional LTM candidate cell is the same as the value of the index information for indicating/determining the UE-based TA measurement in the serving cell within the terminal variable, the terminal may indicate to a lower layer (e.g., PHY/MAC) that the terminal is configured with the UE-based TA measurement for the corresponding conditional LTM candidate. Otherwise, the terminal may indicate to the lower layer (e.g., PHY/MAC) that the terminal is not configured with the UE-based TA measurement for the corresponding conditional LTM candidate.

For another example, the conditional LTM configuration information may include index information for indicating/determining an RLC reset in the serving cell. The terminal stores the received index information for indicating/determining the RLC reset in the serving cell (e.g., ServingCellNoResetID) in its corresponding terminal variable (if the corresponding terminal variable currently includes the information, it replaces the value). If the value of the index information for indicating/determining the RLC reset for the corresponding conditional LTM candidate cell is not the same as the value of the index information for indicating/determining the RLC reset in the serving cell within the terminal variable, the terminal resets the corresponding RLC entity (at the end of this procedure) (after applying the configuration within the conditional LTM candidate configuration in the conditional LTM). The terminal may replace the value of the index information for indicating/determining the RLC reset in the serving cell within its terminal variable with the value of the index information for indicating/determining the RLC reset for the corresponding conditional LTM candidate cell.

For another example, the conditional LTM configuration information may include index information for indicating/determining a PDCP reset (and/or security key update) in the serving cell. The terminal stores the received index information for indicating/determining the PDCP reset in the serving cell in its corresponding terminal variable (if the corresponding terminal variable currently includes the information, it replaces the value). If the value of the index information for indicating/determining the PDCP reset for the corresponding conditional LTM candidate cell is different from the value of the index information for indicating/determining the PDCP reset in the serving cell within the terminal variable, the terminal resets the corresponding PDCP entity (at the end of this procedure) (after applying the configuration within the conditional LTM candidate configuration in the conditional LTM). The terminal performs the corresponding security key update. The terminal may replace the value of the index information for indicating/determining the PDCP reset in the serving cell within its terminal variable with the value of the index information for indicating/determining the PDCP reset for the corresponding conditional LTM candidate cell.

For another example, the conditional LTM configuration information shall include a configuration/configuration list for defining one or more CSI (channel state information) resource groups for one or more conditional LTM candidate configurations. For example, the conditional LTM configuration information may include list information for a conditional LTM CSI resource configuration to be added/modified (e.g., conditional-ltm-CSI-resource-Config-AddModList). The conditional LTM configuration information may be made to include list information for a conditional LTM CSI resource configuration to be released (e.g., conditional-ltm-CSI-resource-Config-ReleaseList). The conditional LTM CSI resource configuration information may include at least one of: information for identifying the corresponding conditional LTM CSI resource configuration (e.g., conditional-ltm-CSI-ResourceConfigId), information for indicating an SS/PBCH (Synchronization Signal / Physical Broadcast Channel) block resource set included in the corresponding conditional LTM CSI resource configuration (e.g., SSB index list) (e.g., conditional-ltm-CSI-SSB-ResourceSet), information for indicating a CSI-RS block resource set included in the corresponding conditional LTM CSI resource configuration (e.g., CRI list) (e.g., conditional-ltm-CSI-RS-ResourceSet), and a list of information for identifying a candidate configuration associated with/related to the corresponding SS/PBCH block resource set or CSI-RS block resource set (e.g., conditional-ltm-candidateID).

For another example, the source/serving base station/base station-CU may generate a common CSI resource configuration for conditional LTM execution/trigger condition evaluation on candidate cells based on information received from one or more target/candidate base stations/base station-CUs. The source/serving base station/base station-CU may transmit the common CSI resource configuration to one or more target/candidate base stations/base station-CUs. And it may receive a response/acknowledgment for this from the target/candidate base station/base station-CU. This procedure may be performed by defining a separate XnAP message before transmitting/receiving an XnAP message for conditional LTM preparation (e.g., handover request message, handover request ack message). Or, this procedure may be performed by including the corresponding XnAP information element or an inter-node RRC message in an XnAP message for conditional LTM preparation (e.g., handover request message, handover request ack message). Or, this procedure may be performed by defining the corresponding XnAP message after transmitting/receiving an XnAP message for conditional LTM preparation (e.g., handover request message, handover request ack message).

For another example, the conditional LTM configuration may include an RRC container/message/information element for a conditional LTM candidate (e.g., conditional-LTM-candidate)/candidate configuration through list information for a conditional LTM candidate configuration to be added/modified (e.g., conditional-ltm-candidate-AddModList). This may be used to indicate LTM-related RRC configuration parameters for the target/candidate cell. The RRC container/message/information element for the conditional LTM candidate (e.g., conditional-LTM-candidate) may include information for identifying the corresponding conditional LTM candidate/candidate configuration. The RRC container/message/information element for the conditional LTM candidate (e.g., conditional-LTM-candidate) may include information for identifying the corresponding conditional LTM candidate cell. The RRC container/message/information element for the conditional LTM candidate (e.g., conditional-LTM-candidate) may include PCI (Physical Cell Identity) information of the special cell of the corresponding conditional LTM candidate configuration. The RRC container/message/information element for the conditional LTM candidate (e.g., conditional-LTM-candidate) may include SSB (Synchronization Signal Block) configuration information in the corresponding conditional LTM candidate configuration. The corresponding SSB configuration information may include SSB frequency, Subcarrier Spacing (SCS), SSB periodicity, ssb-PositionsInBurst and/or ss-PBCH-BlockPower as sub-information elements. The RRC container/message/information element for the conditional LTM candidate (e.g., conditional-LTM-candidate) may include information for indicating the corresponding conditional LTM candidate configuration through an RRC reconfiguration message/container/information element (e.g., conditional-LTM-candidateConfig). The RRC container/message/information element for the conditional LTM candidate (e.g., conditional-LTM-candidate) may include information for indicating whether the corresponding conditional LTM candidate configuration (e.g., conditional-LTM-candidateConfig) is a complete configuration. The RRC container/message/information element for the conditional LTM candidate (e.g., conditional-LTM-candidate) may include information for early uplink synchronization configuration. The RRC container/message/information element for the conditional LTM candidate (e.g., conditional-LTM-candidate) may include index information for indicating/determining a UE-based TA measurement for the corresponding conditional LTM candidate cell. The RRC container/message/information element for the conditional LTM candidate (e.g., conditional-LTM-candidate) may include index information for indicating/determining an RLC reset for the corresponding conditional LTM candidate cell. The RRC container/message/information element for the conditional LTM candidate (e.g., conditional-LTM-candidate) may include index information for indicating/determining a PDCP reset for the corresponding conditional LTM candidate cell. The RRC container/message/information element for the conditional LTM candidate (e.g., conditional-LTM-candidate) may include one or more conditional LTM execution conditions (or trigger conditions). The conditional LTM execution condition (or trigger condition) may be associated with/mapped to information for identifying the corresponding conditional LTM candidate/candidate configuration and/or the corresponding conditional LTM candidate configuration (e.g., conditional-LTM-candidateConfig). The RRC container/message/information element for the conditional LTM candidate (e.g., conditional-LTM-candidate) may apply the corresponding stored conditional LTM candidate configuration when the corresponding execution condition is fulfilled/met by including a plurality of the aforementioned information in association, such as information for identifying the corresponding conditional LTM candidate configuration, the conditional LTM execution condition, and information for indicating the corresponding conditional LTM candidate configuration through an RRC reconfiguration message/container/information element.

For another example, any container/message/information element included in the conditional LTM configuration may allow the serving/source base station to determine/generate/modify the corresponding parameters based on the conditional LTM candidate configuration generated by the candidate/target base station and deliver them to the terminal.

For another example, any container/message/information element included in the conditional LTM configuration may allow the serving/source base station to transparently deliver the conditional LTM candidate configuration generated by the candidate/target base station to the terminal.

For another example, for the execution/trigger condition, the serving/source base station may be made to determine/generate/modify the corresponding parameters and deliver them to the terminal. For example, for the execution/trigger condition of the serving cell, the serving/source base station/base station-DU may be made to determine/generate/modify the corresponding parameters and deliver them to the terminal.

For another example, for the execution/trigger condition, the serving/source base station/base station-DU may deliver the corresponding parameters to the candidate/target base station/base station-DU through an XnAP/F1AP (F1 Application Protocol) message (e.g., a handover request message) during the conditional LTM preparation phase.

For another example, for the execution/trigger condition, the target/candidate base station/base station-DU may deliver the corresponding/related/proposed/indicated parameters to the serving/source base station/base station-DU through an XnAP/F1AP message (e.g., a handover request acknowledge message) during the conditional LTM preparation phase. For example, for an execution condition included in/associated with a candidate conditional LTM candidate information element configuration, each candidate/target base station/base station-DU may generate the corresponding parameters and deliver them to the terminal via the serving/source base station. This enales the corresponding candidate cell to determine the execution/trigger condition when it becomes the serving cell in a subsequent conditional LTM process.

For another example, for the execution/trigger condition, the serving/source base station/base station-DU may determine/generate/modify the corresponding parameters and deliver them to the terminal, taking into account the trigger condition indicated by the candidate/target base station/base station-DU.

For another example, the conditional LTM execution condition may include one or more trigger conditions.


**Third Disclosure**

Conditional LTM procedure

A signaling procedure for supporting conditional LTM shall be specifically provided. The conditional LTM signaling procedure may be configured with at least one of a conditional LTM preparation step, an early synchronization step, a conditional LTM cell switch execution step, and an LTM cell switch completion step.

In the conditional LTM preparation step, the source/serving base station/base station-CU may decide to initiate a conditional LTM configuration for the terminal and prepare a conditional LTM candidate configuration. For example, it may prepare a conditional LTM configuration for the terminal with the source/serving base station-DU and/or the target/candidate base station/base station-CU/base station-DU. The source/serving base station may indicate an RRC reconfiguration message including the conditional LTM configuration to the terminal, and in response, receive an RRC reconfiguration complete message.

In the early synchronization step, the terminal may perform downlink synchronization according to a TCI state activation/deactivation indication triggered from the source/serving base station and/or uplink synchronization according to a PDCCH order indicated by the source/serving base station. For example, it may acquire the TA of the candidate cell from the source cell through CFRA triggered by a PDCCH order. In the early synchronization step, the source/serving base station/base station-CU/base station-DU may receive TA information from the target/candidate base station/base station-CU/base station-DU.

In the conditional LTM cell switch execution step, the terminal may evaluate the conditional LTM execution condition and, if the corresponding execution condition is fulfilled/met, detach from the source/serving cell and perform a cell switch to a new cell. If the terminal does not have a valid TA for the target/candidate cell, the terminal may perform a random access procedure in the conditional LTM cell switch execution step.

In the conditional LTM cell switch completion step, the terminal accesses the target/candidate base station/base station-DU/cell, and the target/candidate base station/base station-DU/cell may indicate LTM success to the source/serving base station/base station-CU, the target/candidate base station may request a path switch to a core network node (e.g., AMF (Access and Mobility Management Function)) and receive a response, and the target/candidate base station may be made to indicate a terminal context release to the source/serving base station.

The timing for the evaluation of the conditional LTM execution condition shall be determined.

As an example, when the terminal receives a conditional LTM configuration, the terminal may maintain a connection with the source/serving base station and start evaluating the execution condition for a candidate cell included in the corresponding LTM configuration (e.g., serving cell execution condition). If at least one conditional LTM candidate cell meets the corresponding execution condition, the terminal may detach from the source/serving base station/base station-CU/base station-DU/cell. The terminal may apply the stored conditional LTM configuration for the corresponding candidate cell.

For another example, when the terminal receives indication information for downlink early synchronization from the source/serving base station, it may start evaluating the execution condition for the candidate cell. For example, when receiving a TCI state activation/deactivation indication triggered from the source/serving base station (e.g., receiving a MAC CE for indicating TCI state activation/deactivation and/or a DCI for indicating the current beam), the terminal may start evaluating the execution condition for the corresponding candidate cell (e.g., the candidate cell with activated TCI state) included in the corresponding LTM configuration (e.g., serving cell execution condition). Information for indicating this may be configured via RRC. Or, the terminal may perform the corresponding operation without configuration information via RRC.

For another example, when the terminal receives indication information for uplink early synchronization from the source/serving base station, it may start evaluating the execution condition for a candidate cell included in the corresponding LTM configuration (e.g., serving cell execution condition). For example, when receiving a PDCCH order from the source/serving base station instructing the transmission of a random access preamble to a candidate cell (e.g., This is done via CFRA triggered by a PDCCH order from the source cell), the terminal may start evaluating the execution condition for the corresponding candidate cell. Information for indicating this may be configured via RRC. Or, the terminal may perform the corresponding operation without configuration information via RRC.

For another example, when the terminal performs downlink/uplink early synchronization, it may start evaluating the execution condition for a candidate cell included in the corresponding LTM configuration (e.g., serving cell execution condition). For example, when a UE-based TA measurement is configured for the terminal, the terminal may acquire the TA value of the candidate cell by measurement. The terminal may start evaluating the execution condition for the corresponding candidate cell. Information for indicating this may be configured via RRC. Or, the terminal may the corresponding operation without configuration information via RRC.

For another example, after the terminal performs downlink/uplink early synchronization, it may start evaluating the execution condition for the candidate cell included in the corresponding LTM configuration (e.g., serving cell execution condition) (that has performed downlink/uplink early synchronization).

For another example, the terminal may be prevented from starting/performing the execution condition evaluation for a candidate cell for which it has not performed downlink/uplink early synchronization or a candidate cell with a deactivated TCI state.

For another example, for a candidate cell for which the terminal has not performed downlink/uplink early synchronization or a candidate cell with a deactivated TCI state, when the terminal receives a conditional LTM configuration, the terminal may start evaluating the execution condition for the corresponding candidate cell.

For another example, in the conditional LTM execution step or the conditional LTM completion step, the terminal may transmit an RRC reconfiguration complete message to the base station. The terminal may complete the conditional LTM cell switch procedure by transmitting the RRC reconfiguration complete message to the target cell. The RRC reconfiguration complete message may include information for identifying the selected conditional LTM configuration that the terminal applied in the conditional LTM execution. For example, it may include candidate/candidate configuration/candidate cell identification information of the conditional LTM configuration.

If the terminal performs a random access procedure, when the random access procedure is successfully completed, the terminal may consider the LTM cell switch execution to be successfully completed.

For a RACH-less conditional LTM, when the terminal confirms/determines that the network/base station/base station-DU/base station-CU has successfully received the first UL data, it may consider the LTM cell switch execution to be successfully completed.

Supporting early data forwarding

The data forwarding method during the conditional LTM process shall be specifically defined.

As an example, after the conditional LTM preparation phase, early data forwarding may be provided. After the source/serving base station transmits an RRC reconfiguration message including a conditional LTM configuration to the terminal, and the terminal transmits an RRC reconfiguration complete message in response (after the source/serving base station receives the RRC reconfiguration complete message), early data forwarding from the source/serving base station to the target/candidate base station may be triggered. For example, the source/serving base station may transmit an EARLY STATUS TRANSFER message to the target/candidate base station.

For another example, early data forwarding may be provided in the early synchronization phase. Early data forwarding may be performed together with downlink synchronization and/or uplink synchronization with the conditional LTM candidate cell. For example, early data forwarding may be performed when the source/serving base station transmits a TCI state activation/deactivation MAC CE for the conditional LTM candidate cell(s) and a DCI for indicating the current beam, when the source/serving base station triggers a Contention-Free Random Access (CFRA) to the conditional LTM candidate cell by a PDCCH order (when transmitting the corresponding PDCCH), and/or when receiving TA information from the target/candidate base station.

For another example, early data forwarding may be provided in the early synchronization phase. For example, early data forwarding may be performed after the source/serving base station transmits a TCI state activation/deactivation MAC CE for the conditional LTM candidate cell(s) and a DCI for indicating the current beam, after the source/serving base station triggers a CFRA to the conditional LTM candidate cell by a PDCCH order (after transmitting the corresponding PDCCH), and/or after receiving TA information transmitted from the target/candidate base station in the source/serving cell.

For another example, early data forwarding may be performed in the conditional LTM cell switch execution phase.

For another example, if the source/serving base station receives a message indicating a (conditional) handover/cell switch success from the target/candidate base station, the source/serving base station may perform late data forwarding to the target/candidate base station. For example, it may transmit an 'SN STATUS TRANSFER' message.

In another embodiment, after the completion of a conditional LTM switch, early data forwarding may be triggered to support a subsequent conditional LTM.

MAC layer operation for conditional LTM support

For a terminal configured with an LTM execution condition associated with an LTM L1 measurement event, the lower layers (MAC/PHY) of the terminal may perform the corresponding execution condition evaluation.

As an example, the MAC layer/entity of the terminal may receive an indication from the physical layer when (at least one) conditional LTM execution condition indicated by the base station (e.g., LTM L1 measurement event) is met. The corresponding indication information may include at least one of: a conditional LTM candidate/candidate cell/candidate configuration ID, an LTM CSI resource configuration identifier (or conditional LTM CSI resource configuration identifier), an LTM CSI report configuration identifier (or conditional LTM CSI report configuration identifier), and an LTM event ID (or L1 event ID or conditional LTM event ID).

For another example, if (at least one) conditional LTM execution condition indicated by the base station (e.g., LTM L1 measurement event) is met in the lower layer/entity (MAC/PHY) of the terminal, the lower layer (MAC/PHY) may indicate indication information for this to a higher layer (e.g., RLC/PDCP/SDAP/RRC). The corresponding indication information may include at least one of: a conditional LTM candidate/candidate cell/candidate configuration ID, an LTM CSI resource configuration identifier (or conditional LTM CSI resource configuration identifier), an LTM CSI report configuration identifier (or conditional LTM CSI report configuration identifier), and an LTM event ID (or L1 event ID or conditional LTM event ID).

Before the terminal's MAC layer/entity transmits/receives an indication that (at least one) conditional LTM execution condition indicated by the base station is met, the terminal may perform DL synchronization with LTM candidate cells. The terminal may activate/deactivate the TCI states of the LTM candidate cells as triggered by the source/serving base station. For example, the terminal may receive a Candidate Cell TCI States Activation/Deactivation MAC CE on the serving cell from the base station. The MAC entity of the terminal may indicate this information to the physical layer.

If UE-based TA (timing advance) measurement is configured, before the MAC layer/entity of the terminal receives an indication that (at least one) conditional LTM execution condition indicated by the base station is met, the terminal may perform uplink TA (timing advance) measurement synchronization with LTM candidate cells using the UE-based TA measurement.

Before the MAC layer/entity of the terminal transmits/receives an indication that (at least one) conditional LTM execution condition indicated by the base station is met, the terminal may be triggered by the base station to transmit a random access preamble to a candidate cell. The terminal may perform early TA acquisition for a candidate cell through CFRA triggered by a PDCCH order from the source cell. For example, it may acquire the TA for the candidate cell through a MAC CE including TA information of the candidate cell (e.g., a random access response message including TA information of the candidate cell, or any MAC CE including TA information of the candidate cell).

As an example, for an LTM/conditional-LTM candidate cell, if the candidate cell is a cell for which conditional LTM is configured, the corresponding terminal may receive a random access response message including TA information of the candidate cell. For example, it may start a random access response window and monitor the PDCCH of the corresponding target/candidate cell for the random access response.

Otherwise (for an LTM/conditional-LTM candidate cell, if the candidate cell is a cell for which conditional LTM is not configured), for example, if it is an LTM candidate cell (e.g., a candidate cell included in an LTM configuration triggered by an LTM cell switch MAC CE), the corresponding terminal may consider the random access procedure to be completed.

For another example, for an LTM/conditional-LTM candidate cell, if the candidate cell is a cell for which an execution condition for conditional LTM is configured (or a cell included in an execution condition), the corresponding terminal may receive a random access response message including TA information of the candidate cell (or any MAC CE including TA information of the candidate cell). For example, it may start a random access response window and monitor the PDCCH of the corresponding source cell for a random access response in the source cell.

Otherwise (for an LTM/conditional-LTM candidate cell, if the candidate cell is a cell for which an execution condition for conditional LTM is not configured), for example, if it is an LTM candidate cell, the corresponding terminal may consider the random access procedure to be completed.

For another example, for a conditional-LTM candidate cell, if the candidate cell is a cell for which an execution condition for conditional LTM is configured (or a cell included in an execution condition), after transmitting a random access preamble to the candidate cell as triggered by a PDCCH order from the source cell, the corresponding terminal may be made to consider the random access procedure to be completed. The corresponding terminal may receive a MAC CE including TA information of the candidate cell from the source cell and monitor the PDCCH of the corresponding source cell for receiving the corresponding MAC CE.

For another example, the base station may prevent a single candidate/target cell from being simultaneously included in an LTM configuration triggered by an LTM cell switch MAC CE and a conditional LTM configuration (and/or conditional LTM execution condition). This enables the terminal to differentiate and process the detailed random access operations according to the corresponding configuration associated with the candidate cell when performing early synchronization.

For another example, the base station may configure the terminal such that a single candidate/target cell is simultaneously included in an LTM configuration triggered by an LTM cell switch MAC CE and a conditional LTM configuration (and/or conditional LTM execution condition). In this case, when the base station instructs the terminal to transmit a random access preamble by a PDCCH order, it may instruct the terminal to differentiate and handle TA acquisition by an LTM cell switch MAC CE and TA acquisition by a MAC CE distinct from the LTM cell switch MAC CE (e.g., a random access response message or a MAC CE including TA information of the candidate cell). For example, it may indicate different values for any information element included in the EarlyUL-SyncConfig information used to configure random access resources for the early uplink synchronization procedure. Or, an explicit information element for indicating this may be added to the EarlyUL-SyncConfig information used.

For another example, a terminal that has acquired TA for a conditional LTM candidate cell may maintain a TA timer for the corresponding candidate cell. The corresponding terminal may apply a TAC (timing advance command) for a TAC received in a MAC CE distinct from the LTM cell switch MAC CE (e.g., a random access response message or a MAC CE including TA information of the candidate cell) for the corresponding candidate cell. The TAT (time alignment timer) associated with the corresponding TAG (timing advance group) may be started/restarted.

The terminal may consider that it does not have a valid TA for the corresponding target/candidate cell when the corresponding timer expires. The terminal may consider that it has a valid TA for the corresponding target/candidate cell if the corresponding timer is running. Information for indicating the corresponding timer value may be indicated (e.g., provided or sent) to the terminal via RRC (included in the conditional LTM configuration). For example, it may include the TAT value included in the EarlyUL-SyncConfig included in the LTM candidate configuration (ltm-candidate) included in the conditional LTM configuration.

The MAC layer/entity of the terminal may operate as follows.

As an example, it may receive an indication from the physical layer for a target/candidate cell that meets the execution condition.

In another embodiment, it may indicate to the upper layers (e.g., RRC/SDAP/PDCP/RLC) that a conditional LTM cell switch procedure is triggered and the target candidate/candidate cell/candidate configuration identifier (e.g., Target Configuration ID, ltm-candidateID-1) that meets the conditional LTM execution condition. Here, the target candidate configuration identifier may represent the index of the candidate configuration of the target cell.

For another example, if a MAC reset operation is performed by a request from a higher layer, and if the terminal has valid timing, a RACH-less conditional LTM cell switch may be considered to be ongoing.

The terminal (or MAC entity) may indicate a skip of the random access procedure for the corresponding conditional LTM cell switch to the higher layer.

For another example, the terminal (or MAC entity) may be triggered by the source/serving base station to activate/deactivate the TCI states of LTM candidate cells. For example, the terminal may receive a Candidate Cell TCI States Activation/Deactivation MAC CE on the serving cell from the base station. The MAC entity of the terminal may indicate this information to a lower layer. The terminal may consider that for a RACH-less conditional LTM cell switch, the SSB/CSI-RS/beam associated with the TCI state indicated by the TCI State ID field of the Candidate Cell TCI States Activation/Deactivation MAC CE is used for selecting a configured uplink grant for initial uplink transmission to the candidate cell.

**Fourth Disclosure**

The source/serving base station/gNB-CU/base station-DU may transmit an XnAP/F1AP message (e.g., Handover request or a new XnAP message distinct from handover request) for a conditional LTM candidate addition/modification request or a conditional LTM preparation request to the target/candidate base station/base station-DU, including a Conditional LTM Information Request IE/IE-group. If the target/candidate base station does not comprehend the corresponding information element (IE), the target/candidate base station may reject the procedure. For this purpose, the assigned criticality of the corresponding IE may be set and defined as reject. The assigned criticality information indicates how to handle receiving an IE or IE group that is not understood, and if the receiving node receives a message including an IE designated as a reject IE that is not understood/interpreted, the receiving node may reject the procedure. Hereinafter, for convenience of explanation, the conditional LTM support indication information included in an XnAP message for an LTM candidate addition/modification request or a conditional LTM preparation request from the source base station/gNB-CU/base station-DU to the target/candidate base station/base station-DU is referred to as an LTM Information Request IE. This is for convenience of explanation only and may be replaced by any other name. The assigned criticality of the Conditional LTM Information Request IE may be set to reject.

As an example, if the Conditional LTM Information Request IE is included in a handover request message, the target base station/base station-CU/base station-DU may consider the request to be related to conditional LTM and include a Conditional LTM Information Acknowledge IE in the HANDOVER REQUEST ACKNOWLEDGE message.

If a Target NG-RAN node UE XnAP ID is included in the Conditional LTM Information Request IE within the handover request message, the target base station may remove an existing prepared conditional LTM identified by the Target NG-RAN node UE XnAP ID and the Target Cell Global ID.

Additional information for supporting inter-base station conditional LTM may be defined and included in the corresponding signaling. As an example, estimated arrival probability information may be included. This information indicates the probability of the terminal arriving at the candidate target base station and may have an integer value between 1 and 100. This information may be included in the Conditional LTM Information Request IE. If this information is included, the target base station may use this information to allocate the necessary resources for the incoming conditional LTM.

For another example, conditional LTM time-based information may be included. For example, it may include the start time and duration information of the corresponding conditional LTM. Or, it may include a value for limiting the time for which the corresponding conditional LTM is valid. If this information is included, the target base station may use this information to allocate the necessary resources for the incoming conditional LTM.

For another example, the source/serving base station/base station-DU may indicate the maximum value of the (inter-CU) conditional LTM candidate configuration to the target/candidate base station/base station-DU. Alternatively, the source/serving base station may indicate to the target/candidate base station the maximum value of the (inter-CU) conditional LTM candidate configuration that the target/candidate base station is required to prepare.

For another example, the Conditional LTM Information Request IE may include a Target NG-RAN node UE XnAP ID. This enables for distinguishing and handling the conditional LTM configuration for the corresponding terminal between base stations.

For another example, the Conditional LTM Information Request IE may include at least one of: a common CSI resource configuration indicated by the source/serving base station, an L1 report configuration for a cell associated with the source/serving base station, a TCI state for a cell associated with the source/serving base station, an execution condition/L1 event evaluation for a target/candidate cell, a common CSI resource configuration, an L1 report configuration for a target/candidate cell, and a TCI state for a target/candidate cell.

For another example, the Conditional LTM Information Acknowledge IE that the source/serving base station receives from the target/candidate base station may include at least one of: a common CSI resource configuration for execution condition/L1 event evaluation for the target/candidate cell, an L1 report configuration for the target/candidate cell, and a TCI state for the target/candidate cell.

It is preferable that the source/serving base station and the target/candidate base station associate the conditional LTM candidate configuration identification information/index/ID with different candidate cells and use unique values. Otherwise, if duplicate values are used to identify candidate configurations, unnecessary signaling may be added for error handling.

As an example, the source/serving base station may indicate the maximum value of the (inter-CU) conditional LTM candidate configuration to the target/candidate base station. (Or, the source/serving base station may indicate to the target/candidate base station the maximum value of the (inter-CU) conditional LTM candidate configuration that the target/candidate base station should prepare.) And/or the source/serving base station may indicate an index for identifying the corresponding base station. Each base station may determine/assign identification information that may uniquely identify the conditional LTM candidate configuration within the corresponding number. Through the index for identifying the corresponding base station and the identification information that may uniquely identify the conditional LTM candidate configuration assigned by each base station, the terminal and the corresponding base stations may uniquely identify the corresponding conditional LTM candidate configuration.

For another example, if there is one or more candidate cells belonging to the target/candidate base station/gNB-CU, a respective conditional LTM candidate addition/modification request XnAP message and/or a corresponding respective acknowledgment/response XnAP message may be transmitted for each candidate cell.

The XnAP message for requesting conditional LTM candidate addition/modification transmitted from the source/serving base station/gNB-CU to the target/candidate base station/gNB-CU may include at least one of: a target/candidate cell global identifier (e.g., NR CGI or E-UTRAN CGI) for a candidate cell belonging to the target/candidate base station/gNB-CU/gNB-DU, and conditional LTM information request information.

The target/candidate base station/gNB-CU may generate and transmit to the source/serving base station/gNB-CU at least one of: a target/candidate cell global identifier (e.g., NR CGI or E-UTRAN CGI) for the conditional LTM candidate cell, 'conditional-ltm-CandidatePCI' representing the PCI of the special cell included in the conditional LTM candidate configuration RRC container (conditional-ltm-CandidateConfig) containing the RRC reconfiguration message used to configure the conditional LTM candidate cell, 'conditional-ltm-DL-OrJointTCI-StateToAddModList'/'conditional-ltm-UL-TCI-StatesToAddModList' representing the list of TCI states to be added/modified for conditional LTM, 'conditional-ltm-ConfigComplete' for indicating whether the conditional LTM candidate configuration is a complete configuration, 'conditional-ltm-EarlyUL-SyncConfig' representing information used to perform early uplink synchronization, 'conditional-ltm-SSB-Config' representing information for indicating the SS/PBCH block configuration used for L1 measurement, and a conditional-ltm-CSI-ResourceConfigList for conditional-LTM CSI resources to be added/modified, including a conditional-LTM-CSI-ResourceConfig, in an acknowledgment XnAP message for the XnAP message requesting conditional LTM candidate addition/modification.

The source/serving base station/gNB-CU may indicate to the terminal a conditional LTM candidate configuration (conditional-LTM-Candidate) including unique conditional LTM candidate configuration identification information based on the information received from the target/candidate base station/gNB-CU. The source/serving base station/gNB-CU may determine the 'conditional-ltm-CandidateId' information (or its value) that identifies/indicates the conditional LTM candidate configuration included in the conditional LTM candidate configuration and indicate it to the terminal.

To support subsequent conditional LTM, the candidate cell information determined by the source/serving base station/gNB-CU (e.g., NR CGI or PCI) and the conditional-LTM configuration identification information associated with the corresponding candidate cell shall be shared with the target/candidate base station/gNB-CU. For this purpose, the source/serving base station/gNB-CU may transmit the candidate cell global identifier for the candidate cell (e.g., NR CGI or E-UTRAN CGI) and the conditional-LTM configuration identification information for the corresponding candidate cell (or a mapping list of one or more candidate cell global identifiers and the LTM configuration identification information for the corresponding candidate cell) to the target/candidate base station/gNB-CU. The corresponding XnAP message may be defined as signaling associated with the terminal. Alternatively, it may be defined as signaling not associated with the terminal by including information for identifying the corresponding terminal (or information configured/allocated to the corresponding terminal).

For another example, when applying inter-base station conditional LTM configuration, the conditional LTM configuration may be applied through the source/serving base station and one or more other target/candidate base stations. The source/serving base station may configure the terminal with a conditional LTM candidate configuration associated with candidate cells belonging to one or more target/candidate base stations. The corresponding function may be applied differently based on terminal capability.

For another example, during the conditional LTM candidate addition/modification/release process via XnAP signaling, the source/serving base station and the target/candidate base station may be configured with unique conditional LTM candidate configuration identification information values.

As an example, the source/serving base station/gNB-CU may determine the conditional LTM candidate configuration identification information associated with a cell belonging to the corresponding source/serving base station/gNB-CU/gNB-DU (or the corresponding candidate cell global ID (e.g., NR CGI)).

For another example, the source/serving base station/gNB-CU may determine/indicate the conditional LTM candidate configuration identification information associated with a cell belonging to the target/candidate base station/gNB-CU/gNB-DU (or the corresponding candidate cell global ID (e.g., NR CGI)).

For another example, the source/serving base station/gNB-CU may propose/indicate the conditional LTM candidate configuration identification information associated with a cell belonging to the target/candidate base station/gNB-CU/gNB-DU (or the corresponding candidate cell global ID (e.g., NR CGI)). The XnAP message for requesting LTM candidate addition/modification transmitted from the source base station/gNB-CU to the target/candidate base station/gNB-CU (e.g., Handover request or a new XnAP message distinct from handover request (e.g., LTM candidate addition request)) may include a proposed/indicated/possible/available/unused value/range/list for the conditional LTM candidate configuration identification information associated with the candidate cell identifier belonging to the target/-candidate base station/gNB-CU/gNB-DU (or candidate cell global ID (e.g., NR CGI), or NR Cell ID, or PCI) and/or a cell belonging to the target/candidate base station/gNB-CU/gNB-DU (or candidate cell global ID (e.g., NR CGI), NR Cell ID or PCI).

For another example, the target/candidate base station/gNB-CU may determine the conditional LTM candidate configuration identification information associated with a cell belonging to the target/candidate base station/gNB-CU/gNB-DU (or the corresponding candidate cell global ID (e.g., NR CGI)). The target/candidate base station/gNB-CU may determine the conditional LTM candidate configuration identification information associated with a cell belonging to the corresponding target/candidate base station/gNB-CU/gNB-DU (or the corresponding candidate cell global ID (e.g., NR CGI)) by considering/using the information received from the source/serving base station/gNB-CU (e.g., a proposed/indicated/possible/available/unused value/range/list for the LTM candidate configuration identification information associated with a cell belonging to the target/candidate base station/gNB-CU/gNB-DU (or candidate cell global ID (e.g., NR CGI), NR Cell ID or PCI)). For example, it may determine the value of the conditional LTM candidate configuration identification information associated with a cell belonging to the corresponding target/candidate base station/gNB-CU/gNB-DU from among the received proposed/indicated/possible/available/unused value/range/list of conditional LTM candidate configuration identification information.

For another example, the target/candidate base station/gNB-CU may determine the conditional LTM candidate configuration identification information associated with a cell belonging to the target/candidate base station/gNB-CU/gNB-DU (or the corresponding candidate cell global ID (e.g., NR CGI)). The target/candidate base station/gNB-CU may determine the conditional LTM candidate configuration identification information associated with a cell belonging to the corresponding target/candidate base station/gNB-CU/gNB-DU (or the corresponding candidate cell global ID (e.g., NR CGI)) by considering/using the information received from the source/serving base station/gNB-CU (e.g., a value/range/list for the conditional LTM candidate configuration identification information associated with a cell belonging to the source/serving base station/gNB-CU/gNB-DU (or candidate cell global ID (e.g., NR CGI), NR Cell ID or PCI)). For example, it may determine the conditional LTM candidate configuration identification information associated with a cell belonging to the corresponding target/candidate base station/gNB-CU/gNB-DU from the remaining values, excluding the received value/range/list of LTM candidate configuration identification information associated with a cell belonging to the source/serving base station/gNB-CU/gNB-DU.

For another example, the conditional LTM candidate configuration identification information (or the corresponding list) associated with a cell belonging to the source/serving base station/gNB-CU/gNB-DU may be included in the RRC context (e.g., handover preparation information message) included in the handover request message. Alternatively, the conditional LTM candidate configuration identification information (or the corresponding list) associated with a cell belonging to the source/serving base station/gNB-CU/gNB-DU may be included in the handover request message as an XnAP information element other than the RRC context.

For another example, the target/candidate base station/gNB-CU may propose/indicate to the source/serving base station/gNB-CU the information of a cell belonging to the target/candidate base station/gNB-CU/gNB-DU (or the corresponding candidate cell global ID (e.g., NR CGI)) and the conditional LTM candidate configuration identification information associated with the cell belonging to the target/candidate base station/gNB-CU/gNB-DU (or the corresponding candidate cell global ID (e.g., NR CGI)).

For another example, the source/serving base station/gNB-CU may transmit/notify/indicate it to the target/candidate base station/gNB-CU through modification/determination/confirmation/generation/allocation of the conditional LTM candidate configuration identification information associated with a cell belonging to the target/candidate base station/gNB-CU/gNB-DU (or the corresponding candidate cell global ID (e.g., NR CGI)) determined/indicated by the target/candidate base station/gNB-CU. Alternatively, the source/serving base station/gNB-CU may determine the conditional LTM candidate configuration identification information associated with a candidate cell (or the corresponding candidate cell global ID (e.g., NR CGI)) based on the conditional LTM candidate configuration identification information associated with a cell belonging to the target/candidate base station/gNB-CU/gNB-DU (or the corresponding candidate cell global ID (e.g., NR CGI)) received/collected from the target/candidate base station/gNB-CU. The corresponding candidate cell may include a cell belonging to the source/serving base station/gNB-CU/gNB-DU.

The preparation of the inter-base station conditional LTM configuration may be initiated by the source/serving base station. For each candidate conditional LTM candidate cell, the preparation of the configuration of the corresponding target/candidate base station, for example, the preparation of at least one configuration among: conditional LTM candidate configuration identification information, any lower layer RRC configurations (e.g., at least one of TCI state configuration, RACH configuration, CSI report configuration, and CSI resource configuration), and any configuration associated with the conditional LTM candidate configuration (e.g., radio bearer configuration), may be initiated based on a conditional LTM request from the source/serving base station/gNB-CU. The source/serving base station/gNB-CU may receive information about the configuration of the conditional LTM candidate cell from one or more target/candidate base stations. The source/serving base station/gNB-CU may modify/determine/confirm/generate/allocate the configuration for the candidate cells based on the received/collected information. The corresponding candidate cell may include a cell belonging to the source/serving base station/gNB-CU/gNB-DU. The source/serving base station/gNB-CU may transmit/indicate/notify/-modify and inform the corresponding target/candidate base station of the modified/determined/confirmed/generated configuration of the conditional LTM candidate cell for the candidate cells. The target/candidate base station may send a response/acknowledgment message for this. The XnAP message for the source/serving base station/gNB-CU to transmit/indicate/notify and inform the corresponding target/candidate base station of the modified/determined/confirmed/generated configuration of the conditional LTM candidate cell may be used by newly defining an XnAP message distinct from the messages of the aforementioned preparation process (e.g., handover request, handover request ack). The corresponding configuration may be at least one of: conditional LTM candidate configuration identification information, any lower layer RRC configurations (e.g., at least one of TCI state configuration, RACH configuration, CSI report configuration, and CSI resource configuration), and any configuration associated with the conditional LTM candidate configuration (e.g., radio bearer configuration).

For another example, the target/candidate base station/gNB-CU may transmit an acknowledgment XnAP message (e.g., Handover request acknowledge or a new XnAP message distinct from handover request acknowledge (e.g., LTM candidate addition request acknowledge)) for the XnAP message requesting LTM candidate addition/modification (e.g., Handover request or a new XnAP message distinct from handover request (e.g., LTM candidate addition request)) to the source/serving base station. The corresponding XnAP message may include and transmit response/acknowledgment information via a Conditional LTM Information Request Acknowledge IE (or IE group). The corresponding XnAP message may include a conditional LTM candidate IE (or at least one sub-IE included in the corresponding IE). Here, the conditional-LTM-Candidate IE is configuration information related to the conditional LTM candidate configuration to be added/modified and may include, in its sub-configuration information, at least one of: 'ltm-CandidateId' indicating identification information for the conditional LTM candidate configuration, 'conditional-ltm-CandidatePCI' representing the PCI of the special cell included in 'conditional-ltm-CandidateConfig' which represents the RRC reconfiguration message/IE used to configure a single conditional LTM candidate cell, 'conditional-ltm-DL-OrJointTCI-StateToAddModList'/'conditional-ltm-UL-TCI-StatesToAddModList' representing the list of TCI states to be added/modified for conditional LTM, 'conditional-ltm-ConfigComplete' for indicating whether the conditional LTM candidate configuration is a complete configuration, 'conditional-ltm-EarlyUL-SyncConfig' representing information used to perform early uplink synchronization, and 'conditional-ltm-SSB-Config' representing information for indicating the CSI resource/SS/PBCH block configuration used for execution condition evaluation.

The maximum number of LTM candidate configurations and conditional LTM candidate configurations may be limited. In the network-based LTM technology of the prior art where an LTM cell switch is performed through an LTM cell switch MAC CE indication, the maximum number of LTM candidates that could be configured for a terminal was 8. It may be necessary to allow conditional LTM and network-based LTM (referred to as normal LTM for convenience of explanation) to be applied simultaneously to a terminal. To support the simultaneous application of conditional LTM and normal LTM, it may be necessary to specify a processing method for this.

As an example, the source/serving base station may control/determine/generate the corresponding conditional LTM candidate configuration and normal LTM candidate configuration for a single terminal such that the maximum number of cells configured for LTM and conditional LTM allowed towards one UE does not exceed 8. For example, if the source/serving base station requests an LTM candidate configuration and/or conditional LTM from a target/candidate base station, it may request the LTM candidate configuration and/or conditional LTM candidate configuration for the corresponding candidate cell considering this. Alternatively, if the source/serving base station requests an LTM candidate configuration and/or conditional LTM from a target/candidate base station, it may include and transmit the maximum number for the LTM candidate configuration and/or the maximum number for the conditional LTM candidate configuration for the corresponding candidate cell, considering this.

For another example, the source/serving base station may control/determine/generate the conditional LTM candidate configuration for a single terminal such that the maximum number of conditional LTM candidate configurations shall not exceed 8, regardless of the normal LTM candidate configuration. For this purpose, terminal capability information for conditional LTM support may be defined.

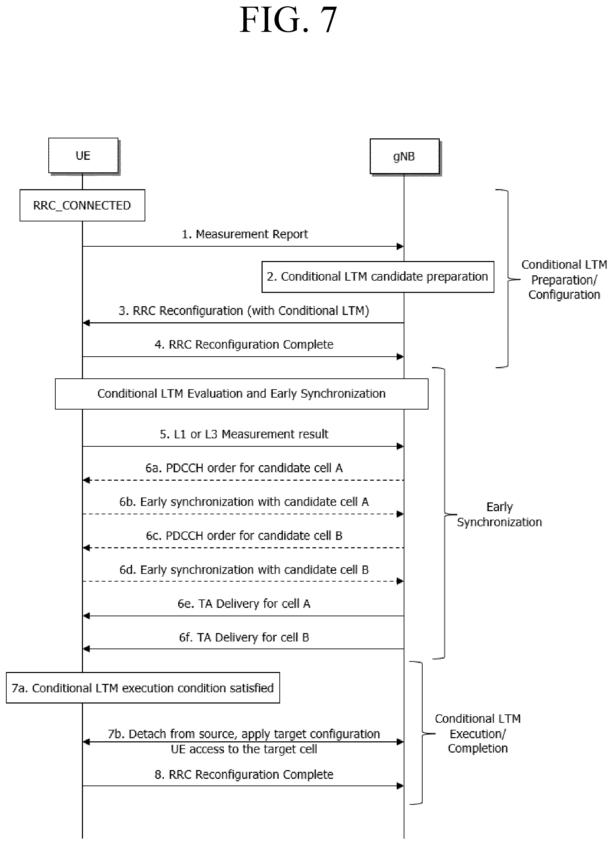

**FIG. 7 is a signal sequence diagram illustrating a conditional LTM procedure according to an embodiment of the present disclosure.**

The conditional LTM procedure will be described in detail below with reference to FIG. 7.

1. The User Equipment (UE) transmits a Measurement Report message to the base station (gNB). The base station determines the conditional LTM configuration and starts conditional LTM preparation.

2. The source base station may request a conditional execution configuration from candidate cells, and the candidate cells provide a conditional configuration including their own execution conditions to be used for a subsequent conditional LTM.

3. The source base station transmits an RRC reconfiguration message to the UE, and the RRC reconfiguration message includes the conditional LTM configuration and conditional LTM execution conditions of the candidate cells.

4. The UE stores the conditional LTM candidate configuration and transmits an RRC reconfiguration complete message (RRCReconfigurationComplete) to the base station. Subsequently, the UE starts evaluating the execution conditions based on the provided configuration.

5/6. The source base station may trigger early synchronization for the UE (for example, based on the UE's L1 or L3 measurement reports, if configured).

The source base station may activate or deactivate the TCI states of the conditional LTM candidate cells. Depending on the network configuration, the UE may perform early UL synchronization with the conditional LTM candidate cell(s) by using UE-based TA measurement (if configured), or by being triggered by the source base station and transmitting a preamble towards the candidate cell(s). In the case of NW triggered UL synchronization, the UE receives a PDCCH order from the source cell to trigger

Contention-Free Random Access (CFRA) towards the candidate cell, and accordingly transmits a preamble towards the candidate cell(s) to perform early TA acquisition.

To minimize data interruption in the source cell due to CFRA towards the designated candidate cell(s), the UE does not receive a Random Access Response (RAR) for the purpose of acquiring a TA value. Instead, the candidate base station transmits a TA INFORMATION TRANSFER message to the source base station. The source base station may provide a TA value for each candidate cell with which the UE has performed uplink (UL) synchronization.

7. When a conditional LTM execution condition is met at the UE, the UE performs a conditional LTM switch at the satisfied candidate LTM cell by applying the configuration of the corresponding LTM candidate cell. If the UE has a valid TA value from the UL early synchronization of Step 6, the UE skips the random access channel (RACH) procedure. Otherwise, it performs RACH as part of the conditional LTM switch procedure.

8. The UE completes the conditional LTM cell switch procedure by transmitting an RRC reconfiguration complete message to the switched LTM cell. Furthermore, the UE does not release the valid TA value(s) of the candidate LTM cells provided with the conditional LTM configuration.

Steps 5-8 may be repeated multiple times for the execution of a subsequent conditional LTM cell switch using the conditional LTM candidate configuration provided in Step 2.

Hereinafter, principles related to conditional LTM will be described.

- Conditional LTM is supported for intra-CU LTM when Dual Connectivity (DC) is not configured. Inter-CU conditional LTM is not supported.
- Conditional LTM may be RACH-based or RACH-less. RACH-based conditional LTM includes Contention-Free Random Access (CFRA) and Contention-Based Random Access (CBRA), and for RACH-less conditional LTM, only Configured Grant (CG)-based is supported.
- User plane processing also applies to conditional LTM. Since there is no reception of an LTM cell switch command MAC CE in conditional LTM, the UE performs a MAC reset during the conditional LTM execution process. Whether to perform RLC re-establishment and PDCP data recovery during a cell switch is explicitly controlled by the network via RRC signaling.

According to an embodiment of the present disclosure, in the conditional LTM procedure described above, a terminal receives a conditional LTM configuration and subsequently performs an evaluation of an execution condition for conditional LTM and an early synchronization to a candidate cell. And, the terminal executes the conditional LTM based on the performed evaluation of the execution condition and the performed early synchronization.

The execution of the conditional LTM may be performed when an evaluation result of the execution condition meets the execution condition.

Additionally, the terminal may receive the execution condition, wherein the execution condition and the conditional LTM configuration may be received via radio resource control (RRC) signaling. Through this RRC signaling, at least one of a channel state information (CSI) report configuration associated with the execution condition or a time alignment timer (TAT) value for the early synchronization may be received. Here, the CSI report configuration is associated with at least one of a first event or a second event, where the first event may correspond to a case where a beam of the candidate cell is better than a beam of the serving cell by an amount of an offset, and the second event may correspond to a case where the beam of the serving cell becomes worse than a first absolute threshold and the beam of the candidate cell becomes better than another second absolute threshold.

Meanwhile, the evaluation of the execution condition may be performed for any beam of the candidate cell and performing the early synchronization may include receiving timing advance (TA) information for the candidate cell from a source base station.

The execution of the conditional LTM may include a medium access control (MAC) entity indicating, to a higher layer, target candidate configuration identification information for which an L1 measurement-based event is satisfied.

During the execution of the conditional LTM, when a medium access control (MAC) reset operation is performed at the request of a higher layer and a time alignment timer (TAT) for the early synchronization is running, it may be considered that a random access channel-less (RACH-less) conditional LTM cell switch is ongoing.

The embodiments of the disclosure may be applied independently or may be operated in any combination. Furthermore, although this disclosure is described based on a 5G NR system, it shall also fall within the scope of this disclosure for all cases where the concepts of this disclosure are applied, regardless of the specific wireless communication technology.

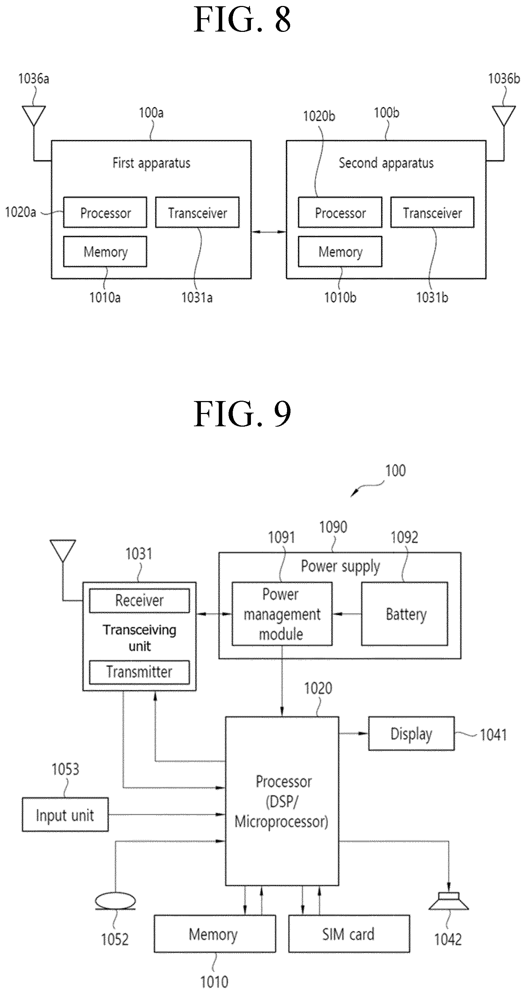

**FIG. 8 is a block diagram showing apparatuses according to an embodiment of the disclosure.**

Referring to FIG. 8, a wireless communication system may include a first apparatus 100a and a second apparatus 100b.

The first apparatus 100a may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 1031a. The processor 1020a may be tasked with executing the previously mentioned functions, procedures, and/or methods. The processor 1020a may be capable of implementing one or more protocols. For example, the processor 1020a may perform and manage one or more layers of a radio interface protocol. The memory 1010a may be connected to the processor 1020a and configured to store various types of information and/or instructions. The transceiver 1031a may be connected to the processor 1020a, and controlled to transceive radio signals.

The second apparatus 100b may include at least one processor such as a processor 1020b, at least one memory device such as a memory 1010b, and at least one transceiver such as a transceiver 1031b. The processor 1020b may be tasked with executing the previously mentioned functions, procedures, and/or methods. The processor 1020b may be capable of implementing one or more protocols. For example, the processor 1020b may manage one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected internally or externally to the processor 1020a and/or the processor 1020b and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

**FIG. 9 is a block diagram showing a terminal (e.g., user equipment: UE) according to an embodiment of the disclosure.**

In particular, FIG. 9 illustrates the previously described apparatus of FIG. 8 in more detail.

The apparatus includes a memory 1010, a processor 1020, a transceiving unit 1031 (e.g., transceiving circuit), a power management module 1091 (e.g., power management circuit), a battery 1092, a display 1041, an input unit 1053 (e.g., input circuit), a loudspeaker 1042, a microphone 1052, a subscriber identification module (SIM) card, and one or more antennas. Some of the constituent elements is referred to as a unit in the disclosure. However, the embodiments are not limited thereto. For example, such term "unit" is also referred to as a circuit block, a circuit, or a circuit module.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON™ series of processors made by Qualcomm®, EXYNOS™ series of processors made by Samsung®, A series of processors made by Apple®, HELIO™ series of processors made by MediaTek®, ATOM™ series of processors made by Intel®, KIRIN™ series of processors made by HiSilicon®, or the corresponding next-generation processors.

The power management module 1091 manages a power for the processor 1020 and/or the transceiver 1031. The battery 1092 supplies power to the power management module 1091. The display 1041 outputs the result processed by the processor 1020. The input unit 1053 may be an individual circuit that receives an input from a user or other devices and convey the received input with associated information to the processor 1020. However, the embodiments are not limited thereto. For example, the input unit 1053 may be implemented as at least one of touch keys or buttons to be displayed on the display 1041 when the display 1041 is capable of sensing touches, generating related signals according to the sensed touches, and transferring the signals to the processor 1020. The SIM card is an integrated circuit used to securely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. The embodiments described in the disclosure may be implemented as software program or application. In this case, such software program or application may be stored in the memory 1010. In response to a predetermined event, the software program or application stored in the memory 1010 may be fetched and executed by the processor 1020 for performing the function and the method described in this disclosure. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020, receives, and transmits a radio signal under control of the processor 1020. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives audio input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

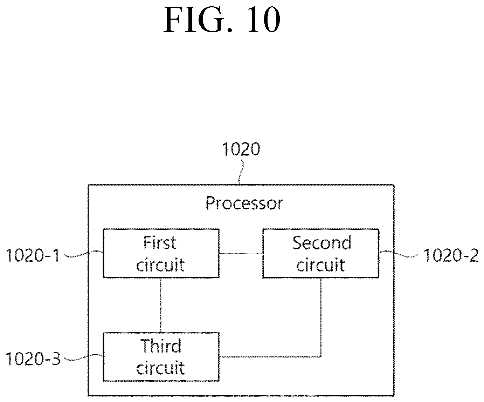

FIG. 10 is a block diagram of a processor in accordance with an embodiment.

Referring to FIG. 10, a processor 1020 may include a plurality of circuits to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP) and may include at least one of a digital signal processor (DSP), a central processing unit (CPU), and a graphics processing unit (GPU).

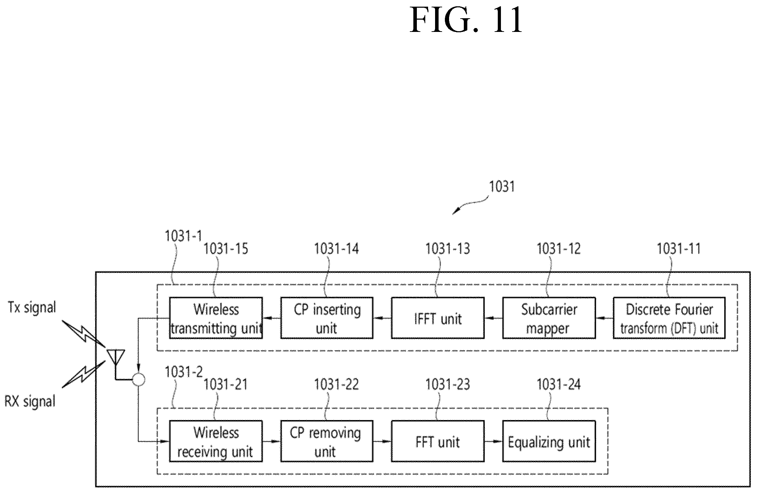

FIG. 11 is a detailed block diagram of a transceiver of a first apparatus shown in FIG. 8 or a transceiving unit of an apparatus shown in FIG. 9.

Referring to FIG. 11, the transceiving unit 1031 (e.g., transceiving circuit) includes a transmitter 1031-1 and a receiver 1031-2. The transmitter 1031-1 includes a discrete Fourier transform (DFT) unit 1031-11 (e.g., DFT circuit), a subcarrier mapper 1031-12 (e.g., subcarrier mapping circuit), an IFFT unit 1031-13 (e.g., IFFT circuit), a cyclic prefix (CP) insertion unit 1031-14 (e.g., CP insertion circuit), and a wireless transmitting unit 1031-15 (e.g., wireless transmitting circuit). The transmitter 1031-1 may further include a modulator. Further, the transmitter 1031-1 may for example include a scramble unit (e.g., scrambling circuit), a modulation mapper, a layer mapper, and a layer permutator, which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13. Some of constituent elements is referred to as a unit in the disclosure. However, the embodiments are not limited thereto. For example, such term "unit" is also referred to as a circuit block, a circuit, or a circuit module.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21 (e.g., wireless receiving circuit), a CP removing unit 1031-22 (e.g., CP removing circuit), an FFT unit 1031-23 (e.g., FFT circuit), and an equalizing unit 1031-24 (e.g., equalizing circuit). The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

According to the embodiments of the disclosure, it is possible to effectively control the execution conditions and terminal variables necessary to support conditional LTM in a wireless communication system.

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

## Claims

1. A method of a terminal to operate in a wireless communication system, the method comprising:

   receiving a conditional layer 1 (L1)/layer 2 (L2) triggered mobility (LTM) configuration;
   after receiving the conditional LTM configuration, performing an evaluation of an execution condition for conditional LTM and an early synchronization to a candidate cell; and
   executing the conditional LTM based on the performed evaluation of the execution condition and the performed early synchronization.

2. The method of claim 1, wherein the execution of the conditional LTM is performed when an evaluation result of the execution condition satisfies the execution condition.

3. The method of claim 1, further comprising:

   receiving the execution condition,

wherein the execution condition and the conditional LTM configuration are received via radio resource control (RRC) signaling.

4. The method of claim 3, wherein at least one of i) a channel state information (CSI) report configuration associated with the execution condition or ii) a time alignment timer (TAT) value for the early synchronization is received via the RRC signaling.

5. The method of claim 4, wherein the CSI report configuration is associated with at least one of a first event or a second event,

the first event corresponds to a case in which a beam of the candidate cell is better than a beam of a serving cell by an amount of an offset, and
the second event corresponds to a case in which the beam of the serving cell becomes worse than a first absolute threshold, and the beam of the candidate cell becomes better than another second absolute threshold.

6. The method of claim 1, wherein the evaluation of the execution condition is performed for any beam of the candidate cell.

7. The method of claim 1, wherein the performing the early synchronization comprises receiving timing advance (TA) information for the candidate cell from a source base station.

8. The method of claim 1, wherein the execution of the conditional LTM includes indicating, from a medium access control (MAC) entity to a higher layer, target candidate configuration identification information for which an L1 measurement-based event is satisfied.

9. The method of claim 1, wherein during the execution of the conditional LTM, when a medium access control (MAC) reset operation is performed at a request of a higher layer and a time alignment timer (TAT) for the early synchronization is running, a random access channel-less (RACH-less) conditional LTM cell switch is considered ongoing.

10. A terminal in a wireless communication system comprising:

at least one processor; and
at least one memory configured to store instructions and operably electrically connectable to the at least one processor, wherein operations performed based on the instructions executed by the at least one processor comprise:

receiving a conditional layer 1 (L1)/layer 2 (L2) triggered mobility (LTM) configuration;
after receiving the conditional LTM configuration, performing an evaluation of an execution condition for conditional LTM and an early synchronization to a candidate cell; and
executing the conditional LTM based on the performed evaluation of the execution condition and the performed early synchronization.

11. The terminal of claim 10, wherein the execution of the conditional LTM is performed when an evaluation result of the execution condition satisfies the execution condition.

12. The terminal of claim 10, wherein the operations performed based on the instructions executed by the at least one processor comprise:

receiving the execution condition,
wherein the execution condition and the conditional LTM configuration are received via radio resource control (RRC) signaling.

13. The terminal of claim 12, wherein at least one of i) a channel state information (CSI) report configuration associated with the execution condition or ii) a time alignment timer (TAT) value for the early synchronization is received via the RRC signaling.

14. The terminal of claim 13, wherein the CSI report configuration is associated with at least one of a first event and a second event,

the first event corresponds to a case where a beam of the candidate cell is better than a beam of a serving cell by an amount of an offset, and
the second event corresponds to a case where the beam of the serving cell becomes worse than a first absolute threshold, and the beam of the candidate cell becomes better than another second absolute threshold.

15. The terminal of claim 10, wherein the evaluation of the execution condition is performed for any beam of the candidate cell.

# FIG. 1

# FIG. 2

# FIG. 3A

# FIG. 3B

# FIG. 3C

# FIG. 4

Resource grid

# FIG. 5

# FIG. 6

DL only

UL only

DL control    UL control    } Mixed UL - DL

Slot

DL    UL

# FIG. 7

EP 4 712 570 A1

# FIG. 8

# FIG. 9

37

# FIG. 10

# FIG. 11

EP 4 712 570 A1

1031

1031-1
1031-15    1031-14    1031-13    1031-12    1031-11

Tx signal

| Wireless transmitting unit | CP inserting unit | IFFT unit | Subcarrier mapper | Discrete Fourier transform (DFT) unit |

RX signal

1031-2
1031-21    1031-22    1031-23    1031-24

| Wireless receiving unit | CP removing unit | FFT unit | Equalizing unit |

## EUROPEAN SEARCH REPORT

**Application Number**

EP 25 20 1866

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QUALCOMM INCORPORATED: "Views on scope for NR Mobility enhancements in Rel-19", 3GPP DRAFT; RP-233214, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG RAN, no. Edinburgh, Scotland; 20231211 - 20231215 4 December 2023 (2023-12-04), XP052557766, Retrieved from the Internet: URL:https://ftp.3gpp.org/tsg_ran/TSG_RAN/T SGR_102/Docs/RP-233214.zip RP-233214.pdf [retrieved on 2023-12-04] | 1,2,5,6, 8,10,11, 14,15 | INV. H04W36/36 |
| Y | * the whole document * | 4,7,9,13 | |
| X | LENOVO: "Discussion on Conditional LTM in Rel-19", 3GPP DRAFT; RP-241976, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG RAN, no. Melbourne, Australia; 20240909 - 20240912 8 September 2024 (2024-09-08), XP052663825, Retrieved from the Internet: URL:https://ftp.3gpp.org/Meetings_3GPP_SYN C/RAN/Docs/RP-241976.zip RP-241976 Discussion on Conditional LTM in Rel-19 v1.2.pptx [retrieved on 2024-09-08] | 1-3,5,6, 8,10-12, 14,15 | TECHNICAL FIELDS SEARCHED (IPC) H04W |
| Y | * the whole document * | 4,7,9,13 | |

-/--

The present search report has been drawn up for all claims

| Place of search | Date of completion of the search | Examiner |
|---|---|---|
| Munich | 21 January 2026 | Wolf, William |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | Europäisches Patentamt<br>European Patent Office<br>Office européen des brevets | **EUROPEAN SEARCH REPORT** | **Application Number**<br>EP 25 20 1866 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ABY KANNEATH ABRAHAM ET AL: "Discussion on remaining issues for LTM", 3GPP DRAFT; R2-2400492; TYPE DISCUSSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, GR; 20240226 - 20240301 19 February 2024 (2024-02-19), XP052560988, Retrieved from the Internet: URL:https://www.3gpp.org/ftp/TSG_RAN/WG2_RL2/TSGR2_125/Docs/R2-2400492.zip R2-2400492 LTM Remaining Issues.doc [retrieved on 2024-02-19] * the whole document * ----- | 4,7,13 | |
| Y | VIVO ET AL: "Remaining issues on partial MAC reset", 3GPP DRAFT; R2-2304912, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 2, no. Incheon, Korea; 20230522 - 20230526 12 May 2023 (2023-05-12), XP052390043, Retrieved from the Internet: URL:https://ftp.3gpp.org/tsg_ran/WG2_RL2/TSGR2_122/Docs/R2-2304912.zip R2-2304912_Remaining issue on partial MAC reset.docx [retrieved on 2023-05-12] * the whole document * ----- | 9 | **TECHNICAL FIELDS SEARCHED (IPC)** |

The present search report has been drawn up for all claims

| Place of search | Date of completion of the search | Examiner |
|---|---|---|
| Munich | 21 January 2026 | Wolf, William |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

page 2 of 2

**EP 4 712 570 A1**

**REFERENCES CITED IN THE DESCRIPTION**

**Patent documents cited in the description**

- WO 1020240125179 A
- WO 1020240125180 A

- WO 1020250125219 A